# EUROPEAN PATENT APPLICATION

(11) **EP 4 557 474 A1**
(43) Date of publication of application: **21.05.2025**
(21) Application number: 22960571.2
(22) Date of filing: 10.11.2022
(51) Int. Cl.: H01M 50/204

(54) **ENERGY STORAGE DEVICE**

(30) Priority: 30.09.2022 WO PCT/CN2022/123362; 30.09.2022 WO PCT/CN2022/123432
(71) Applicant: Contemporary Amperex Technology (Hong Kong) Limited, Hong Kong (HK)
(72) Inventor: LIU, Yue, Ningde, Fujian 352100 (CN); PENG, Haoran, Ningde, Fujian 352100 (CN)
(74) Representative: Kraus & Lederer PartGmbB
(86) International application number: PCT/CN2022/131208
(87) International publication number: WO 2024/065973

(57) **Abstract**

The present disclosure provides an energy storing device, comprising: a box, having a battery cabin; at least one column of batteries, arranged inside the battery cabin, wherein each column of batteries comprises multiple batteries arranged along the height direction of the box; and at least one control box, arranged inside the battery cabin. In the technical solution of the present disclosure, the battery and control box of the energy storing device are both set inside the battery cabin of the box, and their overall structure is simpler. Compared with the structure of the battery and control box being arranged in separate cabins, the structure of the energy storing device can be simplified, thereby improving the assembly efficiency of the overall energy storing device. At the same time, multiple batteries in the battery cabin are arranged along the height direction of the box, which facilitates the assembly, wiring, and other operations of the batteries, thereby further improving assembly efficiency. In addition, multiple batteries are arranged along the height direction of the box, such that the wiring harness arrangement of multiple batteries is simpler and shorter, which can solve the problem of low space utilization rate caused by excessively long wiring harnesses, and improve space utilization rate.

## Description

### Cross-Reference to Related Applications

The present disclosure claims the priority to the PCT international application with the filing No. PCT/CN2022/123362 filed on September 30, 2022, and entitled "Energy Storing Box and Energy Storing Device"; and the priority to the PCT international application with the filing No. PCT/CN2022/123432 filed on September 30, 2022, and entitled "Energy Storing Device", the partial contents of which are incorporated herein by reference.

### Technical Field

The present disclosure relates to the technology field of energy storing device, and in particular to an energy storing device.

### Background Art

Due to the widespread demand for clean energy in the market, energy storing devices have been widely used. In prior art, energy storing devices have complex structures and low assembly efficiency. Therefore, how to improve the assembly efficiency of energy storing devices is an urgent problem to be solved.

### Summary

The present disclosure provides an energy storing device, which is convenient for improving assembly efficiency.

In the first aspect, the present disclosure provides an energy storing device, comprising: a box, having a battery cabin; at least one column of batteries, arranged inside the battery cabin, wherein each column of batteries comprises multiple batteries arranged along the height direction of the box; and at least one control box, arranged inside the battery cabin.

In the technical solution of the present disclosure, the battery and control box of the energy storing device are both set inside the battery cabin of the box, and their overall structure is simpler. Compared with the structure of the battery and control box being arranged in separate cabins, the structure of the energy storing device can be simplified, thereby improving the assembly efficiency of the overall energy storing device. At the same time, multiple batteries in the battery cabin are arranged along the height direction of the box, which facilitates the assembly, wiring, and other operations of the batteries, thereby further improving assembly efficiency. In addition, multiple batteries are arranged along the height direction of the box, such that the wiring harness arrangement of multiple batteries is simpler and shorter, which can solve the problem of low space utilization rate caused by excessively long wiring harnesses. For overall energy storing device, it simplifies the structure, improves assembly efficiency, and also improves space utilization rate.

According to some embodiments of the present disclosure, each control box is electrically connected to one column of batteries, the control box is located below the corresponding column of batteries, and the energy storing device further comprises a baffle, arranged between the control box and at least one column of batteries for protecting the control box.

In the above technical solution, the control box is located below the corresponding battery, further improving the convenience of operation and maintenance of the control box, improving the assembly and wiring efficiency of the control box, and thus further improving the overall assembly efficiency of the energy storing device. A baffle is installed between the control box and the battery to prevent liquids (such as condensate liquid), pollutants, dust, and other impurities located above the control box in the energy storing device from falling into the control box. This provides good protection for the control box, improves its performance stability, and thus enhances the performance stability of the energy storing device.

According to some embodiments of the present disclosure, the projection of the baffle at least partially covers the control box along the height direction.

In the above technical solution, the baffle is located above the control box, and the baffle at least partially covers the control box, so that the baffle plays a covering and protective role on the control box, thereby reducing the possibility of impurities falling into the control box and improving the protective effect of the baffle.

According to some embodiments of the present disclosure, the projection of the baffle completely covers the control box along the height direction.

In the above technical solution, the projection of the baffle completely covers the control box, that is, the control box is completely within the coverage range of the baffle, which is conducive to fully exerting the protective effect of the baffle and further improving the performance stability of the control box.

According to some embodiments of the present disclosure, the energy storing device further comprises a first bracket, wherein the first bracket is arranged inside the battery cabin and connected to the box, the first bracket is configured to carry the battery, and the length of the baffle is less than the length of the first bracket.

In the above technical solution, setting a first bracket inside the box is conducive to improving the convenience of installation and fixation of battery, improving the assembly efficiency of battery, and improving the fixation reliability of battery. The length of the baffle is smaller than that of the first bracket, which can reduce the weight and size of the baffle, reduce material costs, and facilitate the weight reduction of the energy storing device.

According to some embodiments of the present disclosure, the baffle comprises a first surface facing the battery, wherein the first surface is inclined relative to the height direction.

In the above technical solution, the first surface (i.e., the upper surface of the baffle along the height direction of the energy storing box) of the baffle towards the battery is tilted, and the liquid and other impurities that fall on the first surface can slide from the lower edge of the first surface to the bottom of the box under the action of gravity, in order to achieve concentrate treatment at the bottom of the box or timely discharge them from the energy storing box, reducing the risk of impurities (especially liquids) accumulating on the baffle, so as to alleviate the problem of increased moisture inside the box caused by the accumulation of liquid on the baffle and revaporization due to heating, which is conducive to maintaining dryness inside the box.

According to some embodiments of the present disclosure, the angle between the first surface and the reference plane is α, meeting 0° < α≤ 30°, and the height direction is perpendicular to the reference plane.

In the above technical solution, the angle between the first surface and the reference plane perpendicular to the height direction of the energy storing box is greater than zero degrees, allowing the first surface to be tilted relative to the height direction of the energy storing box, thereby improving the smoothness and timeliness of the baffle for discharging liquid. At the same time, if the inclination angle of the baffle is too large, while ensuring the coverage area of the baffle on the control box, the structure of the baffle needs to be increased, and the space occupied by the baffle along the height direction of the energy storing box will also be significantly increased, which is not conducive to improving the space utilization rate of the energy storing box and thus not conducive to improving the energy density of the energy storing device. Controlling the angle between the first surface and the reference plane within a range greater than zero but less than 30° can improve the smoothness and timeliness of the baffle for discharging liquid and also increase the energy density of the energy storing device.

According to some embodiments of the present disclosure, 0.5° ≤ α≤ 15°.

In the above technical solution, the angle between the first surface and the reference plane perpendicular to the height direction of the energy storing box is controlled between 0.5° and 15°, which can further improve the smoothness and timeliness of liquid discharge. At the same time, it is beneficial to further improve the space utilization rate of the energy storing box, thereby increasing the energy density of the energy storing device.

According to some embodiments of the present disclosure, the energy storing device comprises: a first limit member and a second limit member, spaced apart along the height direction and connected to the box, wherein the baffle is inserted between the first limit member and the second limit member.

In the above technical solution, the box is provided therein with the first limit member and the second limit member arranged at intervals along the height direction of the box, and the baffle is inserted between the first limit member and the second limit member. The first limit member and the second limit member cooperate with each other to limit the relative position of the baffle along the height direction, thereby limiting the baffle inside the box and reducing the possibility of the baffle detaching from the installation position. At the same time, the insertion method requires less installation space, which is easy to operate, and beneficial for improving the assembly convenience and assembly efficiency of energy storing device.

According to some embodiments of the present disclosure, the projection of the first limit member on the baffle and the projection of the second limit member on the baffle are staggered along the height direction.

In the above technical solution, the first limit member and second limit member are staggered from each other, which can improve the stability of the first limit member and second limit member in limiting the baffle, and also reduce the extension length of the first and second limit members, save costs, and facilitate disassembly and assembly operations.

According to some embodiments of the present disclosure, the energy storing device further comprises a second bracket, wherein the second bracket is arranged inside the battery cabin and connected to the box, the second bracket is configured to carry the control box, and the first limit member and the second limit member are connected to the second bracket.

In the above technical solution, a second bracket is installed inside the box, which is conducive to improving the convenience of installing and fixing the control box, improving the assembly efficiency of the control box, and improving the reliability of fixing the control box. The first and second limit members are integrated into the second bracket, with strong structural integration, which can further simplify the assembly process of energy storing device, reduce assembly difficulty, and improve the assembly efficiency of energy storing device.

According to some embodiments of the present disclosure, the energy storing device further comprises a fastener, and the baffle is detachably connected to the box through the fastener.

In the above technical solution, the baffle and the box are connected by fasteners, which can further improve the relative position stability of the baffle. Meanwhile, its fixing method is simple and easy to assemble and disassemble, which is conducive to improving the assembly efficiency of the overall energy storing device.

According to some embodiments of the present disclosure, the baffle comprises a baffle body and a first extension part, wherein the baffle body is inserted between the first limit member and the second limit member, and the first extension part extends from the edge of the baffle body; and the energy storing device further comprises a second bracket, wherein the second bracket is arranged inside the battery cabin and connected to the box, wherein the second bracket is configured to support the control box, and the second bracket comprises a bracket body and a second extension part, wherein the second extension part extends from the edge of the bracket body, and the first extension part and the second extension part are overlapped with each other and detachably connected through the fastener.

In the above technical solution, the baffle is equipped with a first extension part, and the second bracket is equipped with a second extension part. The first extension part and the second extension part are connected to each other, which can fix the relative position relationship between the baffle and the second bracket, which is conducive to further improving the convenience of assembly operation and thus improving assembly efficiency.

According to some embodiments of the present disclosure, the baffle comprises a substrate and a first thermal insulating layer stacked along the height direction.

In the above technical solution, the first thermal insulating layer can reduce the temperature difference between the substrate and the internal environment of the box, and play a thermal insulation role on the substrate, thereby reducing the amount of condensate water generated on the substrate, thereby reducing the risk of condensate water droplets generated on the substrate falling on the control box and causing the control box to become damp, which is conducive to further improving the use performance of the control box.

According to some embodiments of the present disclosure, the first thermal insulating layer is located on one side of the substrate facing the control box.

In the above technical solution, the first thermal insulating layer is located on the side of the substrate facing the control box, which can further reduce the possibility of condensation water generated on the side of the baffle facing the control box. Meanwhile, even if a small amount of condensate water is generated, the first thermal insulating layer can assist in absorbing at least some of the condensate water, which is beneficial for further reducing the risk of moisture in the control box.

According to some embodiments of the present disclosure, the heat conductivity coefficient of the first thermal insulating layer is T1, meeting T1 ≤ 0.05W/m·K.

In the above technical solution, the heat conductivity coefficient of the first thermal insulating layer is less than or equal to 0.05W/m·K, which is conducive to improving the insulation performance of the first thermal insulating layer, thereby improving the heat preservation effect of the first thermal insulating layer on the substrate, and reducing the possibility of condensate water generated on the substrate.

According to some embodiments of the present disclosure, each control box is electrically connected to one column of batteries, and the control box is located above or below the corresponding column of batteries, wherein along the height direction, the control box directly faces the batteries adjacent to the control box.

In the above technical solution, the control box directly faces the adjacent battery, eliminating the isolation layer set between the control box and the battery in traditional energy storing devices, thereby simplifying the structure of the energy storing device, further simplifying the assembly process of the energy storing device, and improving the assembly efficiency of the energy storing device.

According to some embodiments of the present disclosure, the box comprises a bottom wall, which includes a second thermal insulating layer.

In the above technical solution, a second thermal insulating layer is installed on the bottom wall of the box, which can provide good thermal insulation for the batteries and control box inside the box, and is conducive to improving the working performance of the batteries and control box in low-temperature environments. At the same time, the second thermal insulating layer is set on the bottom wall of the box, which can prevent the second thermal insulating layer from occupying the internal space of the battery cabin compared to the method of setting it inside the battery cabin, which is conducive to improving the energy density of the energy storing device.

According to some embodiments of the present disclosure, the bottom wall further comprises a first base plate and a second base plate arranged opposite to each other along the height direction, and the second thermal insulating layer is arranged between the first base plate and the second base plate.

In the above technical solution, the second thermal insulating layer is sandwiched between the first base plate and the second base plate. The second thermal insulating layer plays a thermal insulation role on the box. At the same time, the first base plate and the second base plate improve the structural strength of the box while providing protection for the second thermal insulating layer, thereby solving the problem of thermal insulation failure caused by pollution, wetting, and damage when the second thermal insulating layer is exposed to the outside, and improving the thermal insulation effect of the second thermal insulating layer.

According to some embodiments of the present disclosure, the second base plate is located below the first base plate, and at least part of the first base plate is inclined relative to the height direction.

In the above technical solution, at least part of the first base plate is inclined relative to the height direction, such that impurities (especially liquids) falling on the first base plate can accumulate towards lower positions in the height direction under the action of its own gravity, facilitating the collection and discharge of impurities.

According to some embodiments of the present disclosure, the bottom wall further comprises: a first edge beam and a second edge beam, spaced apart along the first direction; and an intermediate beam, arranged between the first edge beam and the second edge beam, wherein the first edge beam, the second edge beam, and the intermediate beam all extend in the second direction, and the first direction, the second direction, and the height direction are perpendicular to each other; and the first base plate comprises a first sub-base plate and a second sub-base plate, wherein the first sub-base plate is connected to the first edge beam and the intermediate beam, and the second sub-base plate is connected to the second edge beam and the intermediate beam.

In the above technical solution, the first edge beam, second edge beam, and intermediate beam form the main load-bearing beam of the box. The first base plate is divided into two pieces of smaller size to reduce the assembly difficulty of the first base plate, which is beneficial for further improving the assembly efficiency of the energy storing device. At the same time, the first edge beam, the second edge beam, and the intermediate beam divide the space between the first and second base plates into two subspaces to facilitate the filling of the second thermal insulating layer in separate chambers. Moreover, the first sub-base plate and second sub-base plate respectively package the second thermal insulating layer filled between the intermediate beam and the first edge beam, and the second thermal insulating layer filled between the intermediate beam and the second edge beam, so as to improve the sealing performance of the second thermal insulating layer packaged between the first and second base plates.

According to some embodiments of the present disclosure, the first sub-base plate gradually tilts downwards along the direction of the first edge beam pointing towards the intermediate beam.

In the above technical solution, the first sub-base plate gradually tilts downwards, and the liquid and other impurities that fall on the first sub-base plate converge towards the direction of the second sub-base plate, facilitating the concentration and treatment of impurities.

According to some embodiments of the present disclosure, along the height direction, the upper end of the first edge beam extends beyond the upper end of the intermediate beam, and the first sub-base plate connects the upper end of the first edge beam and the upper end of the intermediate beam.

In the above technical solution, the upper ends of the first edge beam and the intermediate beam are staggered in height. The first sub-base plate can be connected to the upper end of the first edge beam and the upper end of the intermediate beam to achieve the tilting setting of the first sub-base plate. The installation of the first sub-base plate plays a role in preventing errors and further improving assembly efficiency. At the same time, the first sub-base plate is connected to the upper ends of the first edge beam and the intermediate beam, which can prevent the formation of large faults between the upper surface of the first sub-base plate and the intermediate beam, thereby reducing the possibility of impurities of the first sub-base plate accumulating near the intermediate beam and improving the convenience of cleaning impurities from the box.

According to some embodiments of the present disclosure, the bottom wall is provided with a drainage hole that passes through the second sub-base plate, the second thermal insulating layer, and the second base plate, wherein the drainage hole is configured to discharge the liquid inside the box.

In the above technical solution, a drainage hole is set at the second sub-base plate of the bottom wall, and liquid can be discharged from the box through the drainage hole of the second sub-base plate, which is conducive to keeping the internal environment of the box dry.

According to some embodiments of the present disclosure, the upper surface of the second sub-base plate is inclined to guide the liquid on the upper surface to the drainage hole.

In the above technical solution, the upper surface of the second sub-base plate is inclined, and the liquid flowing to the upper surface can quickly flow towards the position of the drainage hole, further improving the drainage timeliness and smoothness of the box.

According to some embodiments of the present disclosure, the bottom wall further comprises a sleeve, wherein the sleeve is provided at the drainage hole for separating the liquid from the second thermal insulating layer.

In the above technical solution, a sleeve is set up for the drainage hole, which plays an isolation and protection role on the second thermal insulating layer set between the first and second base plates, reducing the possibility of the liquid discharged from the drainage hole wetting the second thermal insulating layer, thereby improving the thermal insulation effect of the second thermal insulating layer.

According to some embodiments of the present disclosure, the bottom wall further comprises: a support member arranged between the first base plate and the second base plate, wherein along the height direction, the support member and the first base plate are arranged at intervals and the support member and the second base plate are arranged at intervals, and the support member is configured to support the second thermal insulating layer.

In the above technical solution, a support member is set between the first base plate and the second base plate, and the support member supports the partial second thermal insulating layer filled between the first base plate and second base plate, enabling the second thermal insulating layer to stably and uniformly fill the space between the first base plate and second base plate, thereby reducing the total filling amount of the second thermal insulating layer and improving the thermal insulation effect of the second thermal insulating layer.

According to some embodiments of the present disclosure, the heat conductivity coefficient of the second thermal insulating layer is T2, meeting T2 ≤ 0.05W/m·K.

In the above technical solution, the heat conductivity coefficient of the second thermal insulating layer is less than or equal to 0.05W/m·K, which is conducive to improving the thermal insulation performance of the second thermal insulating layer, thereby enhancing the thermal insulation effect of the second thermal insulating layer on the internal environment of the box.

According to some embodiments of the present disclosure, the material of the second thermal insulating layer is at least one of polyurethane foam or rock wool.

In the above technical solution, the second thermal insulating layer can use at least one of polyurethane foam or rock wool, which has mature materials, good thermal insulation effect, and strong practicality.

According to some embodiments of the present disclosure, the box is a standard container.

In the above technical solution, the box is a standard container, which can be transported directly by using container transportation tools. It does not require secondary packaging with intermediate devices such as open top cabinets to be combined into standard sizes, making it easy to transport and have strong versatility.

According to some embodiments of the present disclosure, the battery cabin has an opening in a first direction, and along the first direction, the battery cabin is provided with one battery.

In the above technical solution, the battery enters the battery cabin through an opening in the first direction. Along the first direction, one battery is installed in the battery cabin, so that the size of the battery in the first direction can be larger. For example, the size of the battery in the first direction can be close to the size of the battery cabin in the first direction, which can improve the space utilization rate of the battery cabin in the first direction and make the energy storing device have a higher energy density.

According to some embodiments of the present disclosure, the size of the battery cabin in the first direction is L1, and the size of the battery in the first direction is L2, satisfying that L1 is less than 2L2.

In the above technical solution, the ratio of the size L1 of the battery cabin in the first direction to the size L2 of the battery in the first direction meets L1<2L2, such that the size of the battery in the first direction can be larger to make the space utilization rate of the battery cabin in the first direction higher.

According to some embodiments of the present disclosure, 95% ≤ L2/L1 ≤ 100%.

In the above technical solution, the ratio between the size L1 of the battery cabin in the first direction and the size L2 of the battery in the first direction meets the above range, which can further improve the space utilization rate of the battery cabin in the first direction and enable the energy storing device to have a higher energy density.

According to some embodiments of the present disclosure, 98% ≤ L2/L1 ≤ 99%.

In the above technical solution, compared to 95% ≤ L2/L1 ≤ 100%, when 98% ≤ L2/L1 ≤ 99%, it can ensure that the battery cabin has a higher space utilization rate in the first direction, and also facilitate the reservation of assembly space between the battery and other components, thereby reducing interference between the battery and other components.

According to some embodiments of the present disclosure, 1500mm ≤ L1 ≤ 2500mm.

In the above technical solution, the size of the battery cabin in the first direction meets the above range, and the battery cabin has a larger accommodating space. The size of the battery in the first direction can be larger, allowing the energy storing device to have a higher energy density.

According to some embodiments of the present disclosure, 1600mm ≤ L1 ≤ 2400mm.

In the above technical solution, compared to 1500mm ≤ L1 ≤ 2500mm, when 1600mm ≤ L1 ≤ 2400mm, on the one hand, the battery cabin can have a larger capacity, and on the other hand, the space occupied by the battery cabin in the first direction is smaller, making it easier to layout the energy storing box.

According to some embodiments of the present disclosure, 1500mm ≤ L2 ≤ 2500mm.

In the above technical solution, the size of the battery in the first direction meets the above range, in order to facilitate the battery to match the size of the battery cabin in the first direction, so that the energy storing device can have a higher energy density.

According to some embodiments of the present disclosure, 1600mm ≤ L2 ≤ 2400mm.

In the above technical solution, compared to 1500mm ≤ L2 ≤ 2500mm, when 1600mm ≤ L2 ≤ 2400mm, the size of the battery in the first direction is more suitable for assembly with the battery cabin, allowing the energy storing device to have a higher energy density and facilitating the assembly of the battery with other components (such as wiring harnesses).

According to some embodiments of the present disclosure, the first direction is the width direction of the box.

In the above technical solution, the first direction is the width direction of the energy storing box, such that the battery cabin has a higher space utilization rate in the width direction of the energy storing box, in order to improve the overall space utilization rate of the battery cabin and thus make the energy storing device have a higher energy density.

According to some embodiments of the present disclosure, the length direction of the battery is parallel to the first direction.

In the above technical solution, the length direction of the battery is parallel to the width direction of the energy storing box, and the length of the battery matches the width of the energy storing box, thereby reducing the difficulty of processing and manufacturing for battery.

According to some embodiments of the present disclosure, the box comprises a cabin and a cabin door, wherein the cabin has the battery cabin, the cabin door is connected to the cabin, and the cabin door is configured to close the opening of the battery cabin.

In the above technical solution, the cabin door closes the opening of the battery cabin to facilitate the isolation of the battery inside the battery cabin from the outside, so as to protect the battery.

According to some embodiments of the present disclosure, the energy storing device comprises multiple columns of batteries arranged in a second direction in the battery cabin; and multiple control boxes are provided, and multiple control boxes are arranged along the second direction in the battery cabin, wherein each control box is electrically connected to one column of batteries and is located above or below the column of batteries, wherein the second direction is the length direction of the box.

In the above technical solution, multiple columns of batteries are installed inside the battery cabin, and arranged in a rectangular array, which makes more reasonable use of the space in the battery cabin and facilitates the storage of more batteries in the battery cabin, further improving the space utilization rate of the battery cabin.

### Brief Description of Drawings

In order to more clearly illustrate technical solutions of embodiments of the present disclosure, drawings required for use in the embodiments of the present disclosure will be described briefly below. It is obvious that the drawings in the following description are merely illustrative of some embodiments of the present disclosure. It will be understood by those of ordinary skill in the art that other drawings can also be obtained according to the drawings without any inventive effort.
FIG. 1 is a schematic view of the structure of the energy storing device provided in some embodiments of the present disclosure;
FIG. 2 is a partially exploded view of the energy storing device provided in some embodiments of the present disclosure;
FIG. 3 is a front view of the energy storing device provided in some embodiments of the present disclosure;
FIG. 4 is a partially enlarged view of the part A shown in FIG. 2;
FIG. 5 is a schematic view of the structure of the batteries and control box installed inside the box shown in FIG. 4;
FIG. 6 is a partially enlarged view of the part B shown in FIG. 3;
FIG. 7 is a side view of the baffle shown in FIG. 6;
FIG. 8 is a schematic view of the structure of the baffle and the second bracket provided in some embodiments of the present disclosure;
FIG. 9 is a schematic view of the structure of the baffle connected to the first bracket provided in some embodiments of the present disclosure;
FIG. 10 is a front view of the energy storing device provided in some other embodiments of the present disclosure;
FIG. 11 is a partially enlarged view of the part C shown in FIG. 10;
FIG. 12 is a partially sectional side view of the box of the energy storing device shown in FIG. 3;
FIG. 13 is a top view of the box of the energy storing device shown in FIG. 3;
FIG. 14 is a sectional top view of the energy storing device provided in some embodiments of the present disclosure;
FIG. 15 is a schematic view of the battery provided in some embodiments of the present disclosure; and
FIG. 16 is a front view of the energy storing device provided in some other embodiments of the present disclosure.

In the drawings, they are not drawn to the actual scale.

Reference signs: 100-energy storing device; 10-box; 11-cabin; 12-cabin door; 13-battery cabin; 131-opening; 14-bottom wall; 141-first base plate; 142-first sub-base plate; 143-second sub-base plate; 1431-drainage hole; 145-second thermal insulating layer; 146-second base plate; 147-first edge beam; 148-second edge beam; 149-intermediate beam; 1410-sleeve; 1411-support member; 15-support frame; 20-battery; 30-control box; 40-baffle; 41-substrate; 42-first thermal insulating layer; 43-first surface; 44-baffle body; 45-first extension part; 50-first bracket; 51-adapter support; 60-second bracket; 61-bracket body; 611-support plate; 612-connecting plate; 6121-bending part; 613-connecting section; 62-second extension part; 70-first limit member; 80-second limit member; 90-fastener; W-reference plane.

### Detailed Description of Embodiments

In order to make the objectives, technical solutions and advantages of the embodiments of the present disclosure clearer, the technical solutions in the embodiments of the present disclosure will be described clearly and completely below with reference to the drawings in the embodiments of the present disclosure. Obviously, the embodiments described are some of, rather than all of, the embodiments of the present disclosure. The components of the embodiments of the present disclosure, typically described and shown in the drawings herein, can be arranged and designed in various different configurations.

Therefore, the following detailed description of the embodiments of the present disclosure provided in the drawings is not intended to limit the scope of the present disclosure, but only to represent the selected embodiments of the present disclosure. All the other embodiments obtained by those of ordinary skill in the art based on the embodiments of the present disclosure without any creative effort shall fall within the scope of protection of the present disclosure.

The following will provide a detailed description to the embodiments of the technical solution of the present disclosure in conjunction with the drawings. The following embodiments are only used to provide a clearer explanation of the technical solution of the present disclosure, and therefore are only examples and cannot be used to limit the scope of protection of the present disclosure.

Unless otherwise defined, all technical and scientific terms used in the present disclosure have the same meanings as those commonly understood by those skilled in the art to which the present disclosure belongs. The terms used in the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions.

In the description of the embodiments of the present disclosure, the technical terms "first", "second", etc. are only used to distinguish different objects and cannot be understood as indicating or implying relative importance or implying the quantity, specific order, or primary and secondary relationship of the indicated technical features. In the description of the embodiments of the present disclosure, the meaning of "multiple" refers to two or more, unless otherwise expressly specified.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment. Those skilled in the art should understand, in explicit and implicit manners, that an embodiment described in the present disclosure may be combined with another embodiment.

The term "multiple (a plurality of)" in the description of the embodiments of the present disclosure refers to two or more (including two).

In the description of embodiments of the present disclosure, the orientation or positional relationship indicated by the technical terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential" is based on the orientation or positional relationship shown in the drawings, and it is only for facilitating describing the embodiments of the present disclosure and simplifying the description, rather than indicating or implying that the related apparatus or element must be in a specific orientation, or constructed or operated in a specific orientation, and therefore it cannot be understood as a limitation to the embodiments of the present disclosure.

In the description of the embodiments of the present disclosure, unless otherwise expressly specified and defined, the technical terms "arrange", "mount", "connect", "connection", and "fix" should be broadly understood, for example, it may be a fixed connection, or a detachable connection, or integrally formed; it may be a mechanical connection, electrical connection or signal connection; it may be a direct connection, a indirect connection through an intermediate medium, or a communication of interiors or interaction relationship of two elements. For those of ordinary skill in the art, the specific meaning of the foregoing terms in the embodiments of the present disclosure may be understood according to specific circumstances.

In the embodiments of the present disclosure, the same reference signs represent the same components, and for simplicity, detailed descriptions for the same components are omitted in different embodiments. It should be understood that the thickness, length, width, and other dimensions of various components in the embodiments of the present disclosure shown in the drawings, as well as the overall thickness, length, width, and other dimensions of the integrated device, are only illustrative examples and should not constitute any limitations to the present disclosure.

The energy storing device is usually in a cabinet structure, and includes a box, multiple batteries, and control boxes. The interior of the box has cabins for placing batteries and control boxes. Improving the assembly efficiency of the energy storing device is beneficial for increasing its output and thus adapting to the wide market demand.

The inventor found that the structure of the box and the arrangement of the battery directly affect the assembly efficiency of the energy storing device. If the box structure is complex, the assembly process of the box is correspondingly cumbersome, and the assembly time is longer. At the same time, the arrangement of batteries inside the box directly affects the convenience of wiring and layout of the battery, and also affects the grouping efficiency of energy storing devices.

In view of this, in order to improve the assembly efficiency of energy storing devices, the inventor has conducted research and designed an energy storing device. The energy storing device includes a box, which has a battery cabin. The battery and control box are located inside the battery cabin, and the batteries are arranged in columns along the height direction of the box.

The battery and control box of the energy storing device are both set inside the battery cabin of the box, and their overall structure is simpler. Compared with the structure of the battery and control box being arranged in separate cabins, the structure of the energy storing device can be simplified, thereby improving the assembly efficiency of the overall energy storing device. At the same time, multiple batteries in the battery cabin are arranged along the height direction of the box, which facilitates the assembly, wiring, and other operations of the batteries, thereby further improving assembly efficiency.

The energy storing device disclosed in the embodiment of the present disclosure is used for storing energy. For example, devices that require the use of electrical energy require devices that store electrical energy. The energy storing devices of devices that store electrical energy can be household energy storing devices, electrical cabinets, energy storing containers, etc.

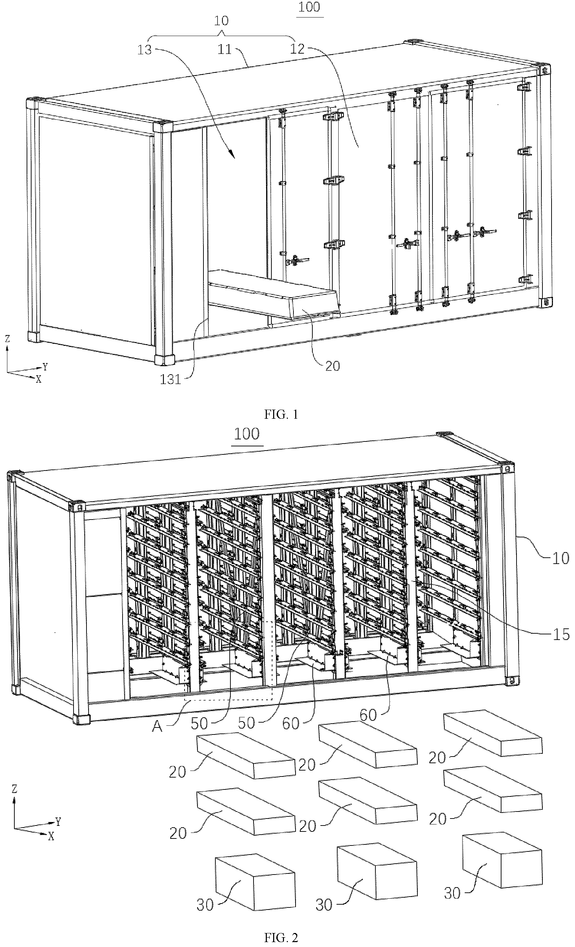

Referring to FIGS. 1 to 2, FIG. 1 is a schematic view of the structure of the energy storing device provided in some embodiments of the present disclosure; and FIG. 2 is a partially exploded view of the energy storing device provided in some embodiments of the present disclosure. Some embodiments of the present disclosure provide an energy storing device 100, which comprises a box 10, at least one column of batteries 20, and at least one control box 30. The box 10 has a battery cabin 13. At least one column of batteries 20 is arranged inside the battery cabin 13, and each column of batteries 20 includes multiple batteries 20 arranged along the height direction of the box 10.

In some embodiments, at least one control box 30 is provided inside the battery cabin 13.

Box 10 provides storage space for battery 20 and control box 30. Box 10 can be of a rectangular structure, with the height direction of box 10 extending in the Z direction as shown in the figure, the length direction of box 10 extending in the Y direction, and the width direction of box 10 extending in the X direction. Box 10 can be a prefabricated energy storing box, an energy storing container, etc. The box 10 can include a body and a cover, the body can be of a hollow structure with an opening 131 at one end, the cover is connected to the body and used to close the open end of the body, and the body and cover form a battery cabin 13. Of course, the body can also be of a hollow structure with openings at both opposite ends, with two sets of covers set up, each covering the two open ends of the body.

According to capacity requirements, the size of box 10 can be adjusted adaptively. For example, box 10 can be an energy storing container, and the size of the container can be an internationally recognized standard size, or customized as a non-standard size based on limitations such as the size of battery 20. Box 10 can be made of materials such as steel, aluminum, alloy, etc. that have certain structural strength and weight bearing capacity.

Multiple batteries 20 are arranged in an orderly manner inside the battery cabin 13 along the height direction of the box 10 (in practical applications, the height direction of the box 10 can be perpendicular to the fixed plane or bearing plane of the energy storing device 100, and the height direction extends along the Z direction in the figure).

It can be understood that the battery cabin 13 can have only one column of batteries 20 inside, or two, three, or even more columns of batteries 20 can also be set. Multiple columns of batteries 20 can be arranged along the length direction (Y direction shown in the figure) or the width direction (X direction shown in the figure) of box 10, or can be arranged in an array inside battery cabin 13.

The control box 30 is of a box structure with control components, which can be PLC (Programmable Logic Controller). The control box 30 is used for electrical connection with one or more batteries 20, and can also be connected to the main control system. Specifically, control box 30 can read the voltage, current, temperature and other data of battery 20 during operation, and control the switch status of battery 20.

The number of control box 30 can be set to only one, which is electrical connected to all batteries 20 in battery cabin 13. Multiple control boxes 30 can also be set, and each control box 30 can be electrical connected to some batteries 20 in battery cabin 13.

The control box 30 can be placed above multiple batteries 20 arranged in columns, or below multiple batteries 20 arranged in columns, or inserted between multiple batteries 20 arranged in columns.

The battery 20 and control box 30 of the energy storing device 100 are both set inside the battery cabin 13 of the box 10, and their overall structure is simpler. Compared with the structure of the battery 20 and control box 30 being arranged in separate cabins, the structure of the energy storing device 100 can be simplified, thereby improving the assembly efficiency of the overall energy storing device 100. At the same time, multiple batteries 20 in the battery cabin 13 are arranged along the height direction of the box 10, which facilitates the assembly, wiring, and other operations of the batteries 20, thereby further improving assembly efficiency. In addition, multiple batteries 20 are arranged along the height direction of the box 10, and the wiring harness arrangement of multiple batteries 20 is simpler and shorter, which can solve the problem of low space utilization rate caused by excessively long wiring harnesses. For overall energy storing device 100, it simplifies the structure, improves assembly efficiency, and also improves space utilization rate.

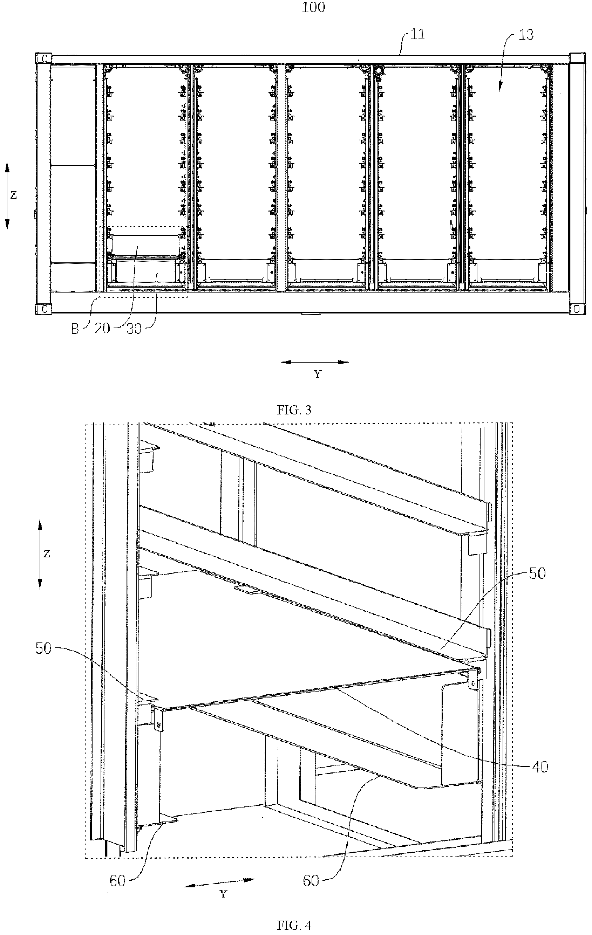

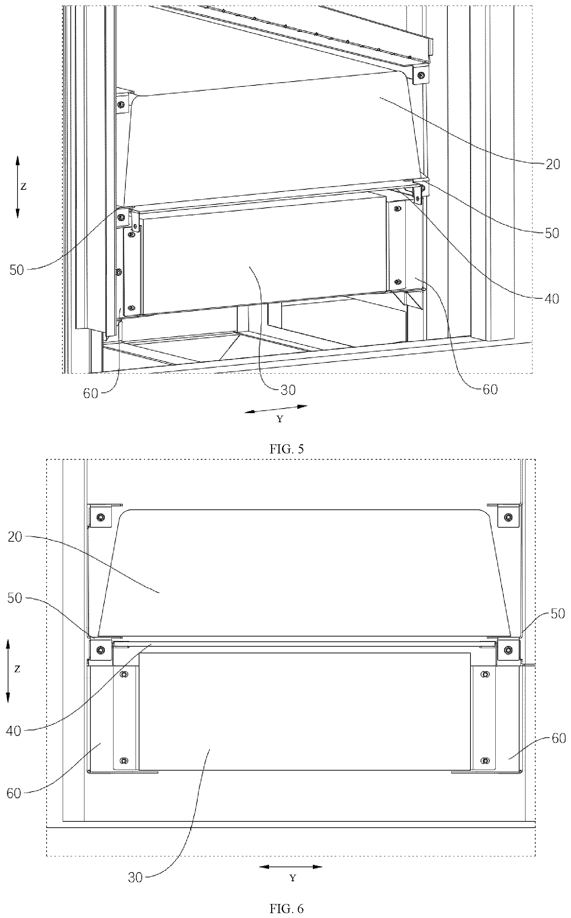

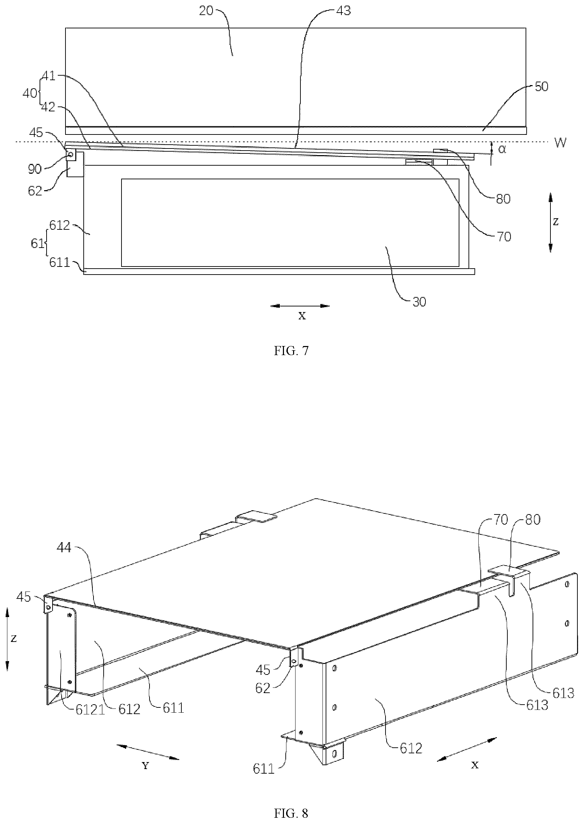

Referring to FIGS. 1 and 2, and further referring to FIGS. 3 to 7, FIG. 3 is a front view of the energy storing device provided in some embodiments of the present disclosure; FIG. 4 is a partially enlarged view of the part A shown in FIG. 2; FIG. 5 is a schematic view of the structure of the batteries and control box installed inside the box shown in FIG. 4; FIG. 6 is a partially enlarged view of the part B shown in FIG. 3; and FIG. 7 is a side view of the baffle shown in FIG. 6. According to some embodiments of the present disclosure, each control box 30 is electrically connected to one column of batteries 20, and the control box 30 is located below the corresponding column of batteries 20. The energy storing device 100 also includes a baffle 40, which is set between the control box 30 and at least one column of batteries 20 to protect the control box 30.

Specifically, the number of control boxes 30 is equal to the number of columns of batteries 20, and each control box 30 is connected to one corresponding column of batteries 20. Control box 30 is located below one column of batteries 20 connected to the control box 30.

The baffle 40 is set between the control box 30 and the batteries 20 located above the control box 30. Specifically, the baffle 40 is set between the control box 30 and one battery 20 adjacent to the control box 30. The baffle 40 is of a roughly plate-like structure, and can be made of metal or plastic materials.

Baffle 40 is used to provide protection for control box 30. Baffle 40 can prevent impurities (such as liquid, dust, etc.) above control box 30 from falling on the main control box to affecting its use performance. Especially, the condensation water is easy to be generated in the box 10 due to temperature differences, and condensation water droplets falling on the main control box can easily cause the main control box to be damp, thereby affecting the use performance of the main control box.

The control box 30 is located below the corresponding battery 20, further improving the convenience of operation and maintenance of the control box 30, improving the assembly and wiring efficiency of the control box 30, and thus further improving the overall assembly efficiency of the energy storing device 100. A baffle 40 is arranged between the control box 30 and the battery 20 to prevent liquids (such as condensate liquid), pollutants, dust, and other impurities located above the control box 30 in the energy storing box 10 from falling into the control box 30. This provides good protection for the control box 30, improves its performance stability, and thus enhances the performance stability of the energy storing device 100.

According to some embodiments of the present disclosure, as shown in FIG. 7, the projection of the baffle 40 at least partially covers the control box 30 along the height direction.

Specifically, the baffle 40 is located above the control box 30, and along the height direction of the box 10 (i.e., Z direction shown in FIG. 7), the projection of the baffle 40 on the control box 30 can cover a part of the control box 30. For example, the projection of the baffle 40 on the control box 30 can only cover the area of the control box 30 where the impurities are easy to enter. The projection of baffle 40 on control box 30 can also fully cover control box 30.

The baffle 40 is located above the control box 30, and the baffle 40 at least partially covers the control box 30, so that the baffle 40 plays a covering and protective role on the control box 30, thereby reducing the possibility of impurities falling into the control box 30 and improving the protective effect of the baffle 40.

According to some embodiments of the present disclosure, the projection of the baffle 40 completely covers the control box 30 along the height direction.

That is to say, along the height direction of the box 10 (i.e., Z direction shown in the figure), the projection of the baffle 40 on the control box 30 completely covers the control box 30, and the control box 30 is fully in the shielding range along the Z direction of the baffle 40.

The control box 30 is completely within the coverage range of the baffle 40, which is conducive to fully exerting the protective effect of the baffle 40 and further improving the performance stability of the control box 30.

According to some embodiments of the present disclosure, referring to FIG. 2 and further referring to FIGS. 5 to 7, the energy storing device 100 further comprises a first bracket 50, which is arranged inside the battery cabin 13 and connected to the box 10. The first bracket 50 is configured to carry the battery 20, and the length of the baffle 40 is smaller than that of the first bracket 50.

The first bracket 50 is a component used to support the battery 20. The first bracket 50 is located inside the battery cabin 13. Optionally, the first bracket 50 can be directly connected to the box 10 or connected to other components set inside the box 10. In some embodiments, a support frame 15 is provided inside the box 10, and the first bracket 50 can be connected to the support frame 15 inside the box 10.

The number of first brackets 50 can be provided in multiple groups, with multiple groups of first brackets 50 distributed within battery cabin 13. Multiple groups of first brackets 50 can be arranged at intervals along the height direction of box 10 (i.e., Z direction in the figure) within the cabin of the battery 20. Each group of first brackets 50 can be used to support at least one battery 20.

There can be multiple implementation structures for the first bracket 50, for example, the first bracket 50 can be a boss connected to the support frame 15, wherein the boss has an upper surface along the height direction. The upper surface of the boss is used to contact the battery 20, and the boss supports the battery 20. The boss can be connected to the inner wall of the box 10 by welding, screwing, or other means.

The length direction of the first bracket 50 extends along the length direction of battery 20. For example, as shown in FIG. 7, the length direction of battery 20 can extend along the width direction (X direction) of box 10, and the length of the first bracket 50 also extends along the X direction. Usually, the length of the first bracket 50 can be greater than, equal to, or less than the length of the battery 20. The length of baffle 40 also extends in the X direction. Along the X direction, the extension length of the first bracket 50 is greater than that of baffle 40. There can be gaps between the two opposite ends of baffle 40 in the X direction and the inner wall of the box 10.

Setting a first bracket 50 inside the box 10 is conducive to improving the convenience of installation and fixation of battery 20, improving the assembly efficiency of battery 20, and improving the fixation reliability of battery 20. The length of the baffle 40 is smaller than that of the first bracket 50, which can reduce the weight and size of the baffle 40, reduce material costs, and facilitate the weight reduction of the energy storing device 100.

According to some embodiments of the present disclosure, referring to FIG. 7, the baffle 40 comprises a first surface 43 facing the battery 20, and the first surface 43 is inclined relative to the height direction.

Specifically, the baffle 40 can have only the first surface 43 as an inclined plane, or the baffle 40 can also be of a flat structure as a whole, wherein the overall baffle 40 is inclined relative to the height direction, so that the first surface 43 is inclined relative to the height direction. For example, the baffle 40 is of a flat structure as a whole, and the baffle 40 is inclined to make the first surface 43 of the baffle 40 as a bevel.

There are various methods to implement the tilted setting of the first surface 43 of the baffle 40, and the first surface 43 can gradually tilt downwards along any direction perpendicular to the height direction. For example, the first surface 43 can gradually tilt downwards along the length direction (i.e., Y direction shown in the figure) of the box 10, or gradually tilt downwards along the width direction (i.e., X direction shown in the figure) of the box 10. For example, as shown in FIG. 7, the baffle can gradually tilt downwards along the width direction (i.e., X direction shown in the figure) of the box 10.

The first surface 43 (i.e., the upper surface of the baffle 40 along the height direction of the energy storing box 10) of the baffle 40 towards the battery 20 is tilted, and the liquid and other impurities that fall on the first surface 43 can slide from the lower edge of the first surface 43 to the bottom of the box 10 under the action of gravity, in order to achieve concentrate treatment at the bottom of the box 10 or timely discharge them from the energy storing box 10, reducing the risk of impurities (especially liquids) accumulating on the baffle 40, so as to alleviate the problem of increased moisture inside the box 10 caused by the accumulation of liquid on the baffle 40 and revaporization due to heating, which is conducive to maintaining dryness inside the box 10.

According to some embodiments of the present disclosure, referring to FIG. 7, the angle between the first surface 43 and the reference plane W is α, meeting 0°< α≤ 30°, and the height direction is perpendicular to the reference plane W.

Specifically, the angle at which the first surface 43 tilts downwards relative to the reference plane W is α, and α can be any angle greater than 0° but less than or equal to 30°.

For example, α can be 5°, 10°, 15°, 20°, 25°, 30°, etc. For example, α can be 2°.

It can be understood that when the height direction of the box extends vertically, the reference plane W can be a horizontal plane.

The angle between the first surface 43 and the reference plane perpendicular to the height direction of the energy storing box 10 is greater than zero degrees, allowing the first surface 43 to be tilted relative to the height direction of the energy storing box 10, thereby improving the smoothness and timeliness of the baffle 40 for discharging liquid. At the same time, if the inclination angle of the baffle 40 is too large, while ensuring the coverage area of the baffle 40 on the control box 30, the structure of the baffle 40 needs to be increased, and the space occupied by the baffle 40 along the height direction of the energy storing box 10 will also be significantly increased, which is not conducive to improving the space utilization rate of the energy storing box 10 and thus not conducive to improving the energy density of the energy storing device 100. Controlling the angle between the first surface 43 and the reference plane within a range greater than zero but less than 30° can improve the smoothness and timeliness of the baffle 40 for discharging liquid and also increase the energy density of the energy storing device 100.

According to some embodiments of the present disclosure, 0.5° ≤ α≤ 15°.

Specifically, the angle at which the first surface 43 tilts downwards relative to the reference plane W is α, and α can be any angle greater than 0.5° but less than or equal to 15°.

For example, α can be 0.5°, 0.8°, 3°, 5°, 8°, 10°, 12°, and 15°, etc. For example, α can be 1°.

The angle between the first surface 43 and the reference plane perpendicular to the height direction of the energy storing box 10 is controlled between 0.5° and 15°, which can further improve the smoothness and timeliness of liquid discharge. At the same time, it is beneficial to further improve the space utilization rate of the energy storing box 10, thereby increasing the energy density of the energy storing device 100.

According to some embodiments of the present disclosure, referring to FIGS. 6 and 7, the energy storing device 100 comprises: a first limit member 70 and a second limit member 80, which are spaced apart along the height direction and connected to the box 10, wherein the baffle 40 is inserted between the first limit member 70 and the second limit member 80.

The first limit member 70 and the second limit member 80 can be in conventional shapes such as block, column, plate, or other irregular structures, as long as a gap exists between the first limit member 70 and the second limit member 80 to accommodate the insertion of the baffle 40. For example, both the first limit member 70 and the second limit member 80 are of a plate-like structure, with the large surfaces of the first limit member 70 and the second limit member 80 perpendicular to the height direction (Z direction).

The surfaces of the first limit member 70 and the second limit member 80 facing the baffle 40 can be in direct contact with the baffle 40, or at least one of them can have a gap with the baffle 40.

The first limit member 70 and the second limit member 80 can be separated and connected to the box 10 respectively. The first limit member 70 and the second limit member 80 can also be connected to each other as an integrated structure, which is connected to the box 10.

The first limit member 70 and the second limit member 80 can be directly connected to the box 10, for example, the first limit member 70 and the second limit member 80 can be directly connected to the inner wall of the box 10. The first limit member 70 and the second limit member 80 can also be indirectly connected to the box 10. For example, the first limit member 70 and the second limit member 80 can be connected to a component located inside the box 10, and such component is connected to the box 10.

The setting positions of the first limit member 70 and the second limit member 80 can be flexibly set according to the insertion direction of the baffle 40. For example, the baffle 40 is inserted between the control box 30 and the battery 20 along the Y direction. The first limit member 70 and the second limit member 80 can be set in two groups, with the two groups of first limit member 70 and second limit member 80 respectively located on two opposite sides of the baffle 40 along the X direction. Of course, the first limit member 70 and the second limit member 80 can also be set at the end of the baffle 40 in the Y direction. After the baffle 40 is inserted in the Y direction, one end of the baffle 40 in the Y direction is inserted between the first limit member 70 and the second limit member 80.

Based on the implementation form of "the box 10 includes a body and a cover", the baffle 40 can be inserted into the box 10 from the open end of the body in the direction opposite to the open end of the body. For example, when the open end of the body is located on one side along the X direction of the body, the baffle 40 can be inserted into the box 10 along the X direction from the open end of the body. At the same time, the first limit member 70 and the second limit member 80 can be set in two groups, with the two groups of first limit member 70 and second limit member 80 respectively arranged on two sides of the baffle 40 along the Y direction.

The box 10 is provided therein with the first limit member 70 and the second limit member 80 arranged at intervals along the height direction of the box 10, and the baffle 40 is inserted between the first limit member 70 and the second limit member 80. The first limit member 70 and the second limit member 80 cooperate with each other to limit the relative position of the baffle 40 along the height direction, thereby limiting the baffle 40 inside the box 10 and reducing the possibility of the baffle 40 detaching from the installation position. At the same time, the insertion method requires less installation space, which is easy to operate, and beneficial for improving the assembly convenience and assembly efficiency of energy storing device 100.

According to some embodiments of the present disclosure, referring to FIG. 7, the projection of the first limit member 70 on the baffle 40 and the projection of the second limit member 80 on the baffle 40 are staggered along the height direction.

That is to say, the first limit member 70 and the second limit member 80 are mutually staggered along the first direction. For example, as shown in FIG. 7, the first limit member 70 and the second limit member 80 are arranged on one side of the baffle 40 along the Y direction, and the first limit member 70 and the second limit member 80 are arranged in intervals along the X direction. The first limit member 70 and the second limit member 80 are misaligned along the Z direction.

The first limit member 70 and second limit member 80 are staggered from each other, which can improve the stability of the first limit member 70 and second limit member 80 in limiting the baffle 40, and also reduce the extension length of the first limit member 70 and second limit member 80, save costs, and facilitate disassembly and assembly operations.

According to some embodiments of the present disclosure, referring to FIG. 2 and further referring to FIGS. 7 and 8, FIG. 8 is a schematic view of the structure of the baffle and the second bracket provided in some embodiments of the present disclosure. The energy storing device 100 further includes a second bracket 60, which is arranged inside the battery cabin 13 and connected to the box 10. The second bracket 60 is configured to carry the control box 30, and the first limit member 70 and the second limit member 80 are connected to the second bracket 60.

The second bracket 60 is a component used to support the control box 30. The second bracket 60 is located inside the battery cabin 13. Optionally, the second bracket 60 can be directly connected to the box 10 or connected to other components set inside the box 10. In some embodiments, a support frame 15 is provided inside the box 10, and the second bracket 60 can be connected to the inner-wall support frame 15 inside the box 10.

The number of second brackets 60 can be provided in multiple groups, and each group of second brackets 60 can support correspondingly one control box 30.

The implementation structure of the second bracket 60 can also be various. For example, as shown in FIGS. 7 and 8, the second bracket 60 can include a support plate 611 and a connecting plate 612. The support plate 611 has an upper surface that intersects with the height direction, and the connecting plate 612 is connected to the upper surface of the support plate 611. The upper surface of the support plate 611 is used to contact and support the electric control box, and the connecting plate 612 is used to be connected with the support frame 15 through welding, screw connection, and other methods. The first limit member 70 and the second limit member 80 can be set at one end of the connecting plate 612 away from the support plate 611 to limit the baffle 40 above the control box 30 located on the support plate 611.

Specifically, at one end of the connecting plate 612 facing away from the support plate 611, there are two connecting sections 613 with varying heights along the height direction. The first limit member 70 and the second limit member 80 are respectively connected to one ends of the two connecting sections 613 facing away from the connecting plate 612.

The first limit member 70 and the second limit member 80 can be fixed to the second bracket 60 by means of screw connection, riveting, welding, etc., or can be integrally formed with the second bracket 60.

The second bracket 60 is arranged inside the box 10, which is conducive to improving the convenience of installing and fixing the control box 30, improving the assembly efficiency of the control box 30, and improving the reliability of fixing the control box 30. The first limit member 70 and second limit member 80 are integrated to the second bracket 60, with strong structural integration, which can further simplify the assembly process of energy storing device 100, reduce assembly difficulty, and improve the assembly efficiency of energy storing device 100.

According to some embodiments of the present disclosure, as shown in FIG. 7, the energy storing device 100 further comprises a fastener 90, and the baffle 40 is detachably connected to the box 10 through the fastener 90.

Specifically, in some embodiments, the baffle 40 can be detachably connected to the box 10 through fastener 90, thereby limiting the baffle 40. In some other embodiments, the baffle 40 may also be limited only by the first limit member 70 and the second limit member 80. In some other embodiments, the baffle 40 can be limited by the first limit member 70 and the second limit member 80, and also connected to the box 10 through a fastener 90 to further improve the stability for limiting the baffle 40. The position of fastener 90 can be flexibly set according to the position of baffle 40.

There are various implementation structures for fasteners, for example, fasteners can be any conventional connection structure such as bolts, clamps, ties, etc.

The box 10 can include a body and a cover, the body can be of a hollow structure with an opening at one end, the cover is connected to the body and used to close the opening of the body, and the body and cover form a battery cabin. Based on the above implementation form, the baffle 40 can be inserted into the box 10 from the open end of the body towards the direction opposite to the open end of the body, and the fastener 90 can be located on one side of the baffle 40 facing the open end of the body, for more convenient disassembly and assembly operations.

It can be understood that the baffle 40 can be directly connected to the box 10 through the fastener 90, and the baffle 40 can also be connected to a structure connected to the box 10 and set inside the box 10 through the fastener 90.

For example, based on the implementation form of "the energy storing device 100 includes a first bracket 50, which is used to support the battery 20", the baffle 40 can be connected to the first bracket 50 of the battery 20 adjacent to the control box 30 through fastener 90.

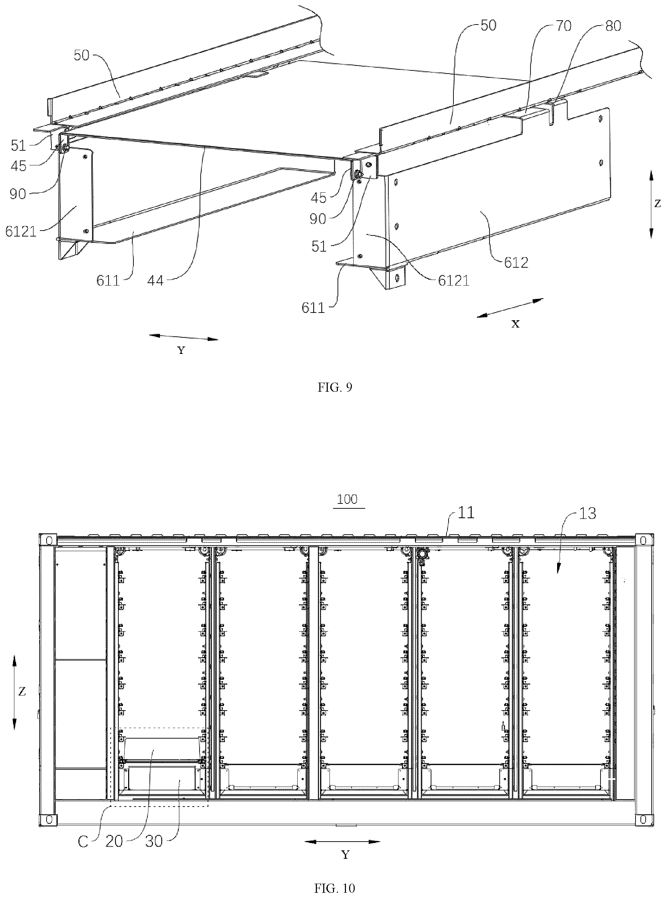

Exemplary, as shown in FIG. 9, FIG. 9 is a schematic view of the structure of a baffle connected to a first bracket provided in some embodiments of the present disclosure. The first bracket 50 is located above the control box 30, and the baffle 40 is set between the first bracket 50 and the control box 30. A connection structure of a fastener 90 (i.e., the first extension part 45 mentioned below) is provided on one side of the baffle 40 along the X direction, and one side of the first bracket 50 along the X direction can be connected to an adapter support 51, wherein the adapter support 51 and the first extension part 45 are connected by fastener 90 to connect the baffle 40 to the first bracket 50.

For another example, based on the implementation form of "the energy storing device 100 includes a second bracket 60, which is used to support the battery 20", the baffle 40 can be connected to the second bracket 60 by the fastener 90. The following text will provide a detailed introduction of the implementation structure of the baffle 40 connected to the second bracket 60.

The baffle 40 and the second bracket 60 are connected by fastener 90, which can further improve the relative position stability of the baffle 40. Meanwhile, its fixing method is simple and easy to assemble and disassemble, which is conducive to improving the assembly efficiency of the overall energy storing device 100.

According to some embodiments of the present disclosure, referring again to FIG. 8, the baffle 40 comprises a baffle body 44 and a first extension part 45, wherein the baffle body 44 is inserted between the first limit member 70 and the second limit member 80, and the first extension part 45 extends from the edge of the baffle body 44; and the energy storing device 100 further comprises a second bracket 60, wherein the second bracket 60 is arranged inside the battery cabin 13 and connected to the box 10, wherein the second bracket 60 is configured to support the control box 30, and the second bracket 60 comprises a bracket body 61 and a second extension part 62, wherein the second extension part 62 extends from the edge of the bracket body 61, and the first extension part 45 and the second extension part 62 are overlapped with each other and detachably connected through the fastener 90.

As mentioned earlier, the setting position of fastener 90 can be adaptively set according to the insertion direction of baffle 40 and the structure of the second bracket.

For example, one end of the box 10 in the X direction is an open end, and the first extension part 45 is located on one side of the baffle body 44 facing the open end in the X direction. The first extension part 45 is of a plate-like structure, and the large surface of the first extension part 45 is perpendicular to the Y direction.

The second bracket 60 includes a support plate 611 and a connecting plate 612. The connecting plate 612 is connected to the upper surface of the support plate 611, the support plate 611 is used to support the electric control box, and the connecting plate 612 is screwed to the box 10 to fix the second bracket 60. Each electronic control box is supported by two second brackets 60, which are located on two opposite sides of the control box 30 in the Y direction. Each second bracket 60 is equipped with a first limit member 70 and a second limit member 80. The first limit member 70 and the second limit member 80 are located at one end of the connecting plate 612 away from the support plate 611 to limit the baffle 40 above the control box 30 located on the support plate 611.

On one side of the connecting plate 612 facing the opening 131 end of the body, a second extension part 62 is set. The second extension part 62 is also in the shape of a plate, and the second extension part 62 is overlapped with the first extension part 45 in the Y direction. The fastener 90 penetrates through the first extension part 45 and the second extension part 62 to connect the two.

It can be understood that two second extension parts 62 can be provided, that is, each second bracket 60 can be set with one second extension part 62. Correspondingly, the baffle 40 can also be set with two first extension parts 45, and the two first extension parts 45 and two second extension parts 62 are connected in one-to-one correspondence.

In some embodiments, a bending part 6121 can be formed on one side of the connecting plate 612 facing the opening 131 end of the body, wherein the bending part 6121 extends in the Y direction. The second extension part 62 is provided on the bending part 6121, and the bending part 6121 can provide a connection surface for the control box 30. The control box 30 set on the second bracket 60 can be connected to the bending part 6121 through fastener 90 or other fasteners.

Based on the implementation form of "the baffle 40 includes a first surface 43 facing the battery 20, which is inclined relative to the height direction", the gap between the first limit member 70 and the second limit member 80 can be misaligned with the fastener 90 along the height direction, so that the baffle 40 can be inclined relative to the height direction as a whole.

The baffle 40 is equipped with a first extension part 45, and the second bracket 60 is equipped with a second extension part 62. The first extension part 45 and the second extension part 62 are connected to each other, which can fix the relative position relationship between the baffle 40 and the second bracket 60, which is conducive to further improving the convenience of assembly operation and thus improving assembly efficiency.

According to some embodiments of the present disclosure, referring again to FIG. 7, the baffle 40 comprises a substrate 41 and a first thermal insulating layer 42 stacked along the height direction.

Substrate 41 can be made of materials with certain structural strength, such as hard plastic, metal, etc. For example, in order to improve the wear resistance, impact resistance, and service life of the baffle 40, the substrate 41 can be made of metal material.

The first thermal insulating layer 42 can be made of any material with good heat insulation performance. In some embodiments, the first thermal insulating layer 42 can be made of heat insulation materials with good water absorption, such as microcellular foaming polypropylene, polyurethane and other materials, or by directly using tripolycyanamide heat insulation cotton, melamine heat insulation cotton, acrylic heat insulation cotton, glass fiber cloth, high silica glass fiber cloth, ceramic fiber cotton, aerogel blanket, etc.

Based on the implementation form of "the baffle 40 includes the baffle body 44 and the first extension part 45", the substrate 41 and the first thermal insulating layer 42 can jointly form the baffle body 44 and be inserted between the first limit member 70 and the second limit member 80, and the first extension part 45 can extend from the substrate 41.

The first thermal insulating layer 42 can reduce the temperature difference between the substrate 41 and the internal environment of the box 10, and play a thermal insulation role on the substrate 41, thereby reducing the amount of condensate water generated on the substrate 41, thereby reducing the risk of condensate water droplets generated on the substrate 41 falling on the control box 30 and causing the control box 30 to become damp, which is conducive to further improving the use performance of the control box 30.

According to some embodiments of the present disclosure, as shown in FIG. 7, the first thermal insulating layer 42 is located on one side of the substrate 41 facing the control box 30.

Specifically, substrate 41 has two opposite surfaces along its thickness direction, one surface facing control box 30 and the other surface facing battery 20. The first thermal insulating layer 42 is provided at the surface on one side of substrate 41 facing control box 30.

The first thermal insulating layer 42 can fully cover the substrate 41 or partially cover the substrate 41. For example, the first thermal insulating layer 42 fully covers the surface of the substrate 41.

The first thermal insulating layer 42 is located on one side of the substrate 41 facing the control box 30, which can further reduce the possibility of condensation water generated on the side of the baffle 40 facing the control box 30. Meanwhile, even if a small amount of condensate water is generated, the first thermal insulating layer 42 can assist in absorbing at least some of the condensate water, which is beneficial for further reducing the risk of moisture in the control box 30.

According to some embodiments of the present disclosure, the heat conductivity coefficient of the first thermal insulating layer 42 is T1, meeting T1 ≤ 0.05W/m·K.

The heat conductivity coefficient refers to the heat flux per unit temperature gradient. Specifically, heat conductivity coefficient refers to the amount of heat transferred through an area of 1 square meter under stable heat transfer conditions within a certain period, with a temperature difference of 1 degree (K, °C) on the surfaces of two sides of a 1m material. The unit thereof is watt/meter·degree (W/(m·K)), where K can be replaced by °C. It can be understood that the larger the heat conductivity coefficient is, the better the thermal conductivity of the first thermal insulating layer 42 is, and vice versa, the worse the thermal insulation performance is.

The heat conductivity coefficient T1 of the first thermal insulating layer 42 can be any value less than or equal to 0.05W/m·K, for example, T1 can be 0.05W/m·K, 0.04W/m·K, 0.03W/m·K, 0.02W/m·K, etc.

The heat conductivity coefficient of the first thermal insulating layer 42 is less than or equal to 0.05W/m·K, which is conducive to improving the insulation performance of the first thermal insulating layer 42, thereby improving the heat preservation effect of the first thermal insulating layer 42 on the substrate 41, and reducing the possibility of condensate water generated on the substrate 41.

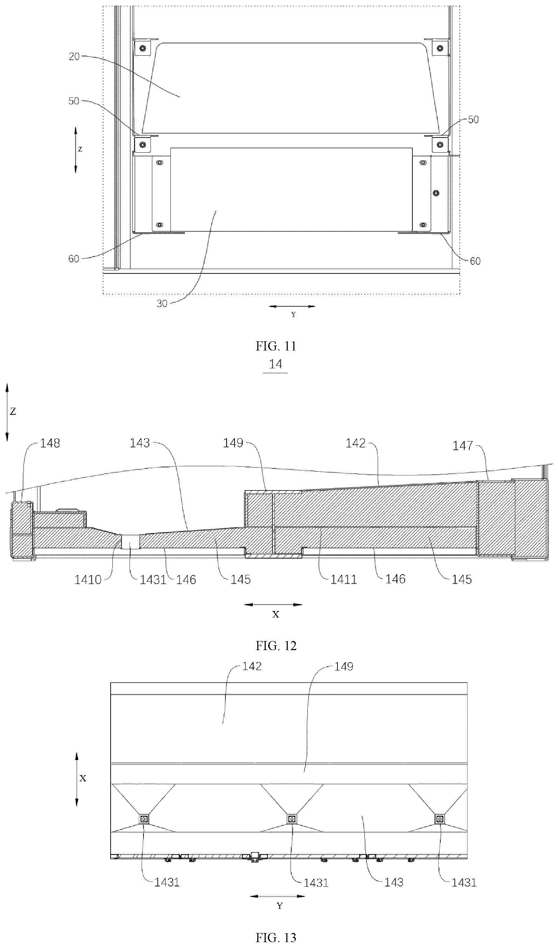

According to some other embodiments of the present disclosure, referring to FIGS. 1 and 2 and further referring to FIGS. 10 and 11, FIG. 10 is a front view of the energy storing device provided in some other embodiments of the present disclosure; and FIG. 11 is a partially enlarged view of the part C shown in FIG. 10. Each control box 30 is electrically connected to one column of batteries 20, and the control box 30 is located above or below the corresponding column of batteries 20, wherein along the height direction, the control box 30 directly faces the battery 20 adjacent to the control box 30.

That is to say, one column of batteries 20 arranged along the height direction (Z direction shown in the figure) is electrically connected to the first control box 30, and the control box 30 can be located above or below the column of batteries 20. The outermost battery 20 along the height direction (Z direction shown in the figure) is adjacent to the control box 30.

The control box 30 directly faces the battery 20 adjacent thereto, which means that there is no partition, baffle or other separate structures between the one battery 20 adjacent to the control box 30 and the control box 30, so that the control box 30 can directly face the battery 20.

The control box 30 directly faces the adjacent battery 20, eliminating the isolation layer set between the control box 30 and the battery 20 in traditional energy storing devices 100, thereby simplifying the structure of the energy storing device 100, further simplifying the assembly process of the energy storing device 100, and improving the assembly efficiency of the energy storing device 100. It is also convenient to save material costs and space in the battery cabin 13.

According to some embodiments of the present disclosure, referring to FIGS. 1 to 3 and referring further to FIGS. 12 and 13, FIG. 12 is a partially sectional side view of the box of the energy storing device shown in FIG. 3; and FIG. 13 is a top view of the box of the energy storing device shown in FIG. 3. The box 10 includes a bottom wall 14, which includes a second thermal insulating layer 145.

Specifically, the bottom wall 14 is equipped with a second thermal insulating layer 145, which can be made of any material with good thermal insulation performance. For example, the second thermal insulating layer 145 can be made of rock wool, asbestos, foam plastics, etc. For example, the second thermal insulating layer 145 can be made of rock wool.

In some embodiments, the second thermal insulating layer 145 may be fixed to the outer surface of the bottom wall 14 of the box 10 by pasting, binding, or other means. Alternatively, the bottom wall 14 of the box 10 can be equipped with a filling chamber, and the second thermal insulating layer 145 can be filled in the filling chamber.

The second thermal insulating layer 145 is installed on the bottom wall 14 of the box 10, which can provide good thermal insulation for the batteries 20 and control box 30 inside the box 10, and is conducive to improving the working performance of the batteries 20 and control box 30 in low-temperature environments. At the same time, the second thermal insulating layer 145 is set on the bottom wall 14 of the box 10, which can prevent the second thermal insulating layer 145 from occupying the internal space of the battery cabin 13 compared to the method of setting it inside the battery cabin 13, which is conducive to improving the energy density of the energy storing device 100.

According to some embodiments of the present disclosure, as shown in FIG. 12, the bottom wall 14 further comprises a first base plate 141 and a second base plate 146 arranged opposite to each other along the height direction, and the second thermal insulating layer 145 is arranged between the first base plate 141 and the second base plate 146.

Specifically, the first base plate 141 and the second base plate 146 are spaced apart along the height direction of the box 10 (Z direction shown in the figure), and a filling cavity for filling the second thermal insulating layer 145 can be formed between the first base plate 141 and the second base plate 146. The second thermal insulating layer 145 is set in the filling cavity, and the first base plate 141, the second thermal insulating layer 145, and the second base plate 146 form a sandwich-like structure.

The second thermal insulating layer 145 can be movably set between the first base plate 141 and the second base plate 146, or the second thermal insulating layer 145 can also be fixed between the first base plate 141 and the second base plate 146 through bonding or other methods.

The second thermal insulating layer 145 is sandwiched between the first base plate 141 and the second base plate 146. The second thermal insulating layer 145 plays a thermal insulation role on the box 10. At the same time, the first base plate 141 and the second base plate 146 improve the structural strength of the box 10 while providing protection for the second thermal insulating layer 145, thereby solving the problem of thermal insulation failure caused by pollution, wetting, and damage when the second thermal insulating layer 145 is exposed to the outside, and improving the thermal insulation effect of the second thermal insulating layer 145.

According to some embodiments of the present disclosure, the second base plate 146 is located below the first base plate 141, and at least part of the first base plate 141 is inclined relative to the height direction.

Specifically, the second base plate 146 is located below the first bottom plate 141 along the height direction of the box 10, and the first base plate 141 is located above the second base plate 146 along the height direction. The upper surface of the first base plate 141 can form the inner surface of the box 10.

The inclined setting of the first base plate 141 can form an inclined surface on the upper surface of the first base plate 141, such that impurities such as sundries and liquids falling on the first base plate 141 in the box 10 can slide along the inclined surface of the first base plate 141 to facilitate the centralized treatment of impurities in the box 10.

There can be multiple tilting directions for the first base plate 141. For example, the first base plate 141 can gradually tilt downwards along the Y direction. Specifically, the first base plate 141 can gradually tilt downwards along a direction of one end of the Y direction pointing towards the other end, or the first base plate 141 can also gradually tilt downwards along a direction of the two opposite ends of the Y direction pointing towards the middle. For another example, the first base plate 141 can gradually tilt downwards along the X direction. Specifically, the first base plate 141 can gradually tilt downwards along a direction of one end of the X direction pointing towards the other end, or the first base plate 141 can also gradually tilt downwards along a direction of the two opposite ends of the X direction pointing towards the middle. Of course, the first base plate 141 can also be inclined along a direction of the edge towards the center, thereby forming a structure with a low center and a high outer circumference on the first base plate 141.

At least part of the first base plate 141 is inclined relative to the height direction, such that impurities (especially liquids) falling on the first base plate 141 can accumulate towards lower positions in the height direction under the action of its own gravity, facilitating the collection and discharge of impurities.

According to some embodiments of the present disclosure, as shown in FIG. 12, the bottom wall 14 further comprises: a first edge beam 147 and a second edge beam 148, spaced apart along the first direction; and an intermediate beam 149, arranged between the first edge beam 147 and the second edge beam 148, wherein the first edge beam 147, the second edge beam 148, and the intermediate beam 149 all extend in the second direction, and the first direction, the second direction, and the height direction are perpendicular to each other; and the first base plate 141 comprises a first sub-base plate 142 and a second sub-base plate 143, wherein the first sub-base plate 142 is connected to the first edge beam 147 and the intermediate beam 149, and the second sub-base plate 143 is connected to the second edge beam 148 and the intermediate beam 149.

Specifically, the first direction can extend along the X direction in the figure, and the second direction can extend along the Y direction in the figure. The first direction X can be the width direction or length direction of box 10. When the first direction X is the length direction of box 10, the second direction Y is the width direction of box 10. When the first direction X is the width direction of box 10, the second direction Y is the length direction of box 10. For example, as shown in FIGS. 12 and 13, when the first direction X is the width direction of box 10, the second direction Y is the length direction of box 10.

The first edge beam 147 and the second edge beam 148 are arranged opposite to each other along the first direction X, and the intermediate beam 149 is arranged between the first edge beam 147 and the second edge beam 148. The first edge beam 147, the second edge beam 148, and the intermediate beam 149 are arranged at intervals along the first direction X, and the length direction of the first edge beam 147, the second edge beam 148, and the intermediate beam 149 all extend along the second direction Y.

The first base plate 141 includes a first sub-base plate 142 and a second sub-base plate 143. The first sub-base plate 142 and the second sub-base plate 143 are arranged side by side along the first direction X. The first sub-base plate 142 connects the first edge beam 147 and the intermediate beam 149, and the second sub-base plate 143 connects the second edge beam 148 and the intermediate beam 149. It can be understood that a second thermal insulating layer 145 can be installed between the first sub-base plate 142 and the second base plate 146, and between the second sub-base plate 143 and the second base plate 146. That is to say, the first sub-base plate 142, the first edge beam 147, the intermediate beam 149, and the region of the second base plate 146 corresponding to the first sub-base plate 142 along the height direction can form one filling cavity for filling the second thermal insulating layer 145. The second sub-base plate 143, the second edge beam 148, the intermediate beam 149 and the region of the second base plate 146 corresponding to the second sub-base plate 143 along the height direction can form another filling cavity for filling the second thermal insulating layer 145.

The first edge beam 147, second edge beam 148, and intermediate beam 149 form the main load-bearing beam of the box 10. The first base plate 141 is divided into two pieces of smaller size to reduce the assembly difficulty of the first base plate 141, which is beneficial for further improving the assembly efficiency of the energy storing device 100. At the same time, the first edge beam 147, the second edge beam 148, and the intermediate beam 149 divide the space between the first base plate 141 and second base plate 146 into two subspaces to facilitate the filling of the second thermal insulating layer 145 in separate chambers. Moreover, the first sub-base plate 142 and second sub-base plate 143 respectively package the second thermal insulating layer 145 filled between the intermediate beam 149 and the first edge beam 147, and the second thermal insulating layer 145 filled between the intermediate beam 149 and the second edge beam 148, so as to improve the sealing performance of the second thermal insulating layer 145 packaged between the first base plate 141 and second base plate 146.

According to some embodiments of the present disclosure, referring to FIG. 12, the first sub-base plate 142 gradually tilts downwards along the direction of the first edge beam 147 pointing towards the intermediate beam 149.

Specifically, the first edge beam 147 and the intermediate beam 149 are spaced apart along the first direction X, and the first sub-base plate 142 gradually slopes downwards along the direction of the first edge beam 147 pointing towards the intermediate beam 149. The upper surface of the first sub-base plate 142 forms an inclined plane that is inclined relative to the height direction, and along the height direction of the box 10, one end of the first sub-base plate 142 facing the first edge beam 147 is higher than the end of the first sub-base plate 142 facing the intermediate beam 149. If impurities fall on the first sub-base plate 142 inside the box 10, they will slide towards the direction of the intermediate beam 149 under their own gravity, and can eventually accumulate at one end near the intermediate beam 149 of the first sub-base plate 142, or at the position of the intermediate beam 149, or enter the upper surface of the second sub-base plate 143 through the intermediate beam 149.

The first sub-base plate 142 gradually tilts downwards, and the liquid and other impurities that fall on the first sub-base plate 142 converge towards the direction of the second sub-base plate 143, facilitating the concentration and treatment of impurities.

According to some embodiments of the present disclosure, referring to FIG. 12, along the height direction, the upper end of the first edge beam 147 extends beyond the upper end of the intermediate beam 149, and the first sub-base plate 142 connects the upper end of the first edge beam 147 and the upper end of the intermediate beam 149.

Specifically, in the direction perpendicular to the height direction, the upper end of the intermediate beam 149 and the upper end of the first edge beam 147 are not flush to each other. The upper end of the first edge beam 147 is higher than the upper end of the intermediate beam 149. One end of the first sub-base plate 142 facing the intermediate beam 149 is connected to the upper end of the intermediate beam 149, and one end of the first sub-base plate 142 facing the first edge beam 147 is connected to the upper end of the first edge beam 147.

The upper ends of the first edge beam 147 and the intermediate beam 149 are staggered in height. The first sub-base plate 142 can be connected to the upper end of the first edge beam 147 and the upper end of the intermediate beam 149 to achieve the tilting setting of the first sub-base plate 142. The installation of the first sub-base plate 142 plays a role in preventing errors and further improving assembly efficiency. At the same time, the first sub-base plate 142 is connected to the upper ends of the first edge beam 147 and the intermediate beam 149, which can prevent the formation of large faults between the upper surface of the first sub-base plate 142 and the intermediate beam 149, thereby reducing the possibility of impurities of the first sub-base plate 142 accumulating near the intermediate beam 149 and improving the convenience of cleaning impurities from the box 10.

In some embodiments, the second base plate 146 may be connected to the lower ends of the intermediate beam 149, the first edge beam 147, and the second edge beam 148. Similar to the structure of the first base plate 141, two second base plates 146 can be provided, one of which connects the first edge beam 147 and the intermediate beam 149, and the other of which connects the intermediate beam 149 and the second edge beam 148.

In some embodiments, the intermediate beam 149 may be made of an I-beam, with the first base plate 141 connected to the upper crossbeam of the I-beam and the second base plate 146 connected to the vertical beam or lower crossbeam of the I-beam.

In some embodiments, the first edge beam 147 may be composed of two C type steels that are snapped in opposite directions. After the two C type steels are snapped, an inner cavity is formed, and the inner cavity can also be filled with thermal insulation material. Similarly, the second edge beam 148 may be composed of two C type steels that are snapped in opposite directions. After the two C type steels are snapped, an inner cavity is formed, and the inner cavity can also be filled with thermal insulation material.

According to some embodiments of the present disclosure, as shown in FIG. 12, the bottom wall 14 is provided with a drainage hole 1431 that passes through the second sub-base plate 143, the second thermal insulating layer 145, and the second base plate 146, wherein the drainage hole 1431 is configured to discharge the liquid inside the box 10.

As mentioned earlier, the first sub-base plate 142 is connected to the upper end of the intermediate beam 149, so the liquid dripping on the first sub-base plate 142 can enter the region of second sub-base plate 143 through the intermediate beam 149.

The bottom wall 14 is equipped with a drainage hole 1431 that penetrates through the second sub-base plate 143, the second thermal insulating layer 145, and the second base plate 146, enabling the liquid accumulated from the first sub-base plate 142 to the second sub-base plate 143 and the liquid dripping on the second sub-base plate 143 to be discharged from the box 10 through the drainage hole 1431.

It can be understood that one or multiple drainage holes 1431 can be set, as shown in FIG. 13, multiple drainage holes 1431 can be set at intervals along the second direction Y on the second sub-base plate 143 to further improve the timeliness of drainage.

The second sub-base plate 143 can also be inclined in at least some areas relative to the height direction, and the drainage hole 1431 can be set at the lower position of the second sub-base plate 143. Of course, the second sub-base plate 143 can also be set without tilting, and the plane where the second sub-base plate is located can be flush with the upper end of the intermediate beam 149 or lower than the upper end of the intermediate beam 149.

Based on the implementation form of "the box 10 includes a body and a cover, and the box 10 is of a hollow structure with one end opened", the second sub-base plate 143 equipped with a drainage hole 1431 can be close to the open end of the box 10. For example, the open end of the box 10 is located on one side of the box 10 along the X direction, and the second sub-base plate 143 and the first sub-base plate 142 are arranged side by side along the X direction. The second sub-base plate 143 is closer to the open end of the box 10 compared to the first sub-base plate 142, so as to facilitate manual construction and maintenance of drainage hole 1431.

The drainage hole 1431 is set at the second sub-base plate 143 of the bottom wall 14, and liquid in the box 10 can be discharged from the box 10 through the drainage hole 1431 of the second sub-base plate 143, which is conducive to keeping the internal environment of the box 10 dry.

In some embodiments, a drainage valve can also be installed inside the drainage hole 1431.

According to some embodiments of the present disclosure, the upper surface of the second sub-base plate 143 is inclined to guide the liquid on the upper surface to the drainage hole 1431.

That is to say, the second sub-base plate 143 is also inclined, and the drainage hole 1431 is located at the lower position of the second sub-base plate 143.

It can be understood that the second sub-base plate 143 can tilt downwards in any direction relative to the height direction. For example, the second sub-base plate 143 can gradually tilt downwards along the direction of the second edge beam 148 pointing towards the intermediate beam 149, and the drainage hole 1431 is set on one side of the second sub-base plate 143 near the intermediate beam 149. Of course, the second sub-base plate 143 can also gradually tilt downwards along the direction of the intermediate beam 149 towards the second edge beam 148, and the drainage hole 1431 is set on one side of the second sub-base plate 143 near the second edge beam 148.

For example, as shown in FIGS. 12 and 13, the drainage hole 1431 is set near the middle position along the first direction X at the second sub-base plate 143, and the edge of the second sub-base plate 143 gradually slopes downwards towards the drainage hole 1431.

The upper surface of the first sub-base plate 142 forms an inclined plane that is inclined relative to the height direction, and along the height direction of the box 10, one end of the first sub-base plate 142 facing the first edge beam 147 is higher than the end of the first sub-base plate 142 facing the intermediate beam 149. If impurities fall on the first sub-base plate 142 inside the box 10, they will slide towards the direction of the intermediate beam 149 under their own gravity, and can eventually accumulate at one end near the intermediate beam 149 of the first sub-base plate 142, or at the position of the intermediate beam 149, or enter the upper surface of the second sub-base plate 143 through the intermediate beam 149.

The upper surface of the second sub-base plate 143 is inclined, and the liquid flowing to the upper surface can quickly flow towards the position of the drainage hole 1431, further improving the drainage timeliness and smoothness of the box 10.

According to some embodiments of the present disclosure, as shown in FIG. 12, the bottom wall 14 further comprises a sleeve 1410, wherein the sleeve 1410 is provided at the drainage hole 1431 for separating the liquid from the second thermal insulating layer 145.

Specifically, a second thermal insulating layer 145 is filled between the second sub-base plate 143 and the second base plate 146. If the liquid discharged through the drainage hole 1431 enters the second thermal insulating layer 145, it will wet the second thermal insulating layer 145 and affect its thermal insulation effect.

The bottom wall 14 is equipped with a sleeve 1410, which is inserted into the drainage hole 1431. One end in the axial direction of the sleeve 1410 can be sealed with and connected to the second sub-base plate 143, and the other end can be sealed with and connected to the second base plate 146. The inner cavity of the sleeve 1410 forms a drainage channel, thereby separating the liquid from the second thermal insulating layer 145.

The drainage hole 1431 is equipped with a sleeve 1410, which provides isolation and protection for the second thermal insulating layer 145 located between the first base plate 141 and the second base plate 146, thereby reducing the possibility of liquid discharged from the drainage hole 1431 wetting the second thermal insulating layer 145, and improving the thermal insulation effect of the second thermal insulating layer 145.

According to some embodiments of the present disclosure, as shown in FIG. 12, the bottom wall 14 further comprises a support member 1411, which is provided between the first base plate 141 and the second base plate 146, and along the height direction Z, the support member 1411, the first base plate 141, and the second base plate 146 are spaced pairwise. The support member 1411 is used to support the second thermal insulating layer 145.

The support member 1411 can have multiple implementation structures, and the support member 1411 can be in a plate-like structure arranged opposite to the first base plate 141, or can include multiple strip-type structures. The multiple strip-type structures are arranged at intervals along any direction perpendicular to the height direction (such as along the first direction X) to form the support member 1411. The support member 1411 can be fixedly connected to the edge of the bottom wall 14 through welding, screw connection, and other methods.

A first sub-filling space can be formed between the support member 1411 and the first base plate 141, and a second sub-filling space can be formed between the support member 1411 and the second base plate 146. Both the first sub-filling space and the second sub-filling space are provided with a second thermal insulating layer 145.

The support member 1411 is set between the first base plate 141 and the second base plate 146, and the support member 1411 divides the space between the first base plate 141 and the second base plate 146 and supports the partial second thermal insulating layer 145 filled between the first base plate 141 and second base plate 146, enabling the second thermal insulating layer 145 to stably and uniformly fill the space between the first base plate 141 and second base plate 146, thereby reducing the total filling amount of the second thermal insulating layer 145 and improving the thermal insulation effect of the second thermal insulating layer 145.

According to some embodiments of the present disclosure, the heat conductivity coefficient of the second thermal insulating layer 145 is T2, meeting T2 ≤ 0.05W/m·K.

The heat conductivity coefficient T2 of the second thermal insulating layer 145 can be any value less than or equal to 0.05W/m·K, for example, T2 can be 0.05W/m·K, 0.04W/m·K, 0.03W/m·K, 0.02W/m·K, etc.

The heat conductivity coefficient of the second thermal insulating layer 145 is less than or equal to 0.05W/m·K, which is conducive to improving the thermal insulation performance of the second thermal insulating layer 145, thereby enhancing the thermal insulation effect of the second thermal insulating layer 145 on the internal environment of the box 10.

According to some embodiments of the present disclosure, the material of the second thermal insulating layer 145 is at least one of polyurethane foam or rock wool. Its materials are mature and have good heat preservation and thermal insulation effects, with strong practicality.

According to some embodiments of the present disclosure, box 10 is a standard container.

Standard container refers to an international standard container, which is an internationally recognized standard container constructed and used in accordance with international standards. The dimensions of international standard containers can be divided into "external dimensions" and "minimum internal dimensions". The standard container in this embodiment can be of any specification. For example, a standard container can be a standard 20-foot container, with external dimensions of 6058mm in length x 2438mm in width x 2896mm in height.

The box 10 is a standard container, which can be transported by directly using container transportation tools. It does not require secondary packaging with intermediate devices such as open top cabinets to be combined into standard sizes, making it easy to transport and have strong versatility.

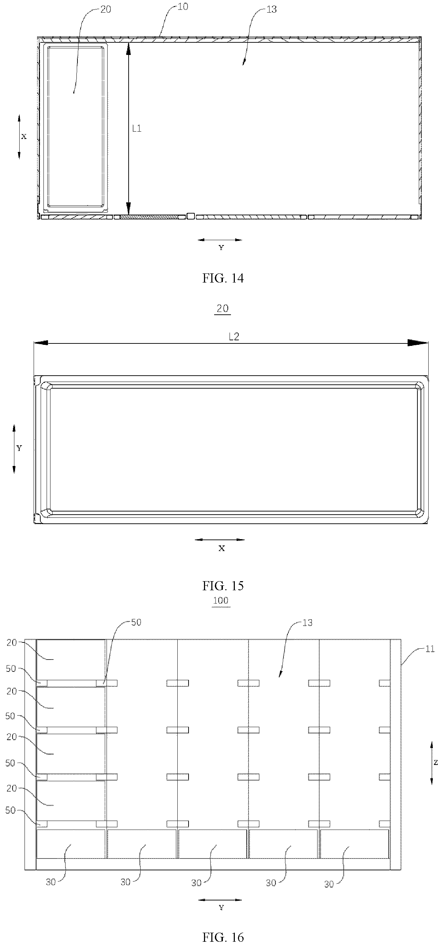

According to some embodiments of the present disclosure, referring to FIGS. 1 to 3, and further referring to FIG. 14, FIG. 14 is a sectional top view of the energy storing device provided in some embodiments of the present disclosure. The battery cabin 13 has an opening 131 in the first direction, and along the first direction, one battery 20 is provided in the battery cabin 13.

In the figure, the first direction extends along the X direction, and the first direction X can be either the width direction of box 10 or the length direction of box 10. For illustration purposes, only one battery 20 is shown in FIG. 1 to illustrate the battery cabin 13.

The battery cabin 13 is a compartment used to accommodate battery 20, which can enter the battery cabin 13 from the opening 131 of the battery cabin 13 along the first direction X.

Along the first direction, one battery 20 is installed in battery cabin 13, which can be understood as that only one battery 20 is arranged in the battery cabin 13 along the first direction X.

The battery cabin 13 can have an opening 131 on one side in the first direction X, allowing two energy storing devices 100 to be adjacent, and the openings 131 of the battery cabins 13 of the two energy storing devices 100 can be set opposite to each other to improve the space utilization rate of the position where the energy storing device 100 is located.

Of course, battery cabin 13 can also have openings 131 on both sides of the first direction X, and batteries 20 can be placed into or removed from the battery cabin 13 respectively from both sides of the first direction X.

The battery 20 enters the battery cabin 13 through an opening 131 in the first direction. Along the first direction, one battery 20 is installed in the battery cabin 13, so that the size of the battery 20 in the first direction can be larger. For example, the size of the battery 20 in the first direction can be close to the size of the battery cabin 13 in the first direction, which can improve the space utilization rate of the battery cabin 13 in the first direction and make the energy storing device 100 have a higher energy density.

According to some embodiments of the present disclosure, referring to FIGS. 14 and 15, FIG. 15 is a schematic view of the battery provided in some embodiments of the present disclosure. The size of the battery cabin 13 in the first direction is L1, and the size of the battery 20 in the first direction is L2, satisfying that L1 is less than 2L2.

The dimension L1 of battery cabin 13 in the first direction X refers to the distance between the opening 131 of battery cabin 13 and the inner surface of the cabin wall located at one end of battery cabin 13 away from the opening 131 along the first direction X.

Battery 20 is located inside battery cabin 13, and the relationship between the size L1 of battery cabin 13 in the first direction X and the size L2 of battery 20 in the first direction X meets: L1>L2.

The ratio of the size L1 of the battery cabin 13 in the first direction to the size L2 of the battery 20 in the first direction meets L1<2L2, such that the size of the battery 20 in the first direction can be larger to make the space utilization rate of the battery cabin 13 in the first direction higher.

According to some embodiments of the present disclosure, 95% ≤ L2/L1 ≤ 100%.

The ratio of L2/L1 can be any value between 95% and 100%. Optionally, L2/L1 can be 95%, 95.4%, 96%, 96.8%, 97%, 97.6%, 98%, 98.8%, 99%, 99.5%, or 100%.

The ratio between the size L1 of the battery cabin 13 in the first direction and the size L2 of the battery 20 in the first direction meets the above range, which can further improve the space utilization rate of the battery cabin 13 in the first direction and enable the energy storing device 100 to have a higher energy density.

According to some embodiments of the present disclosure, 98% ≤ L2/L1 ≤ 99%.

That is to say, the ratio of L2/L1 can be any value between 98% and 99%. Optionally, L2/L1 can be 98%, 98.1%, 98.2%, 98.25%, 98.3%, 98.4%, 98.5%, 98.6%, 98.7%, 98.8%, 98.9% or 99%.

Compared to 95% ≤ L2/L1 ≤ 100%, when 98% ≤ L2/L1 ≤ 99%, it can ensure that the battery cabin 13 has a higher space utilization rate in the first direction X, and also facilitate the reservation of assembly space between the battery 20 and other components, thereby reducing interference between the battery 20 and other components.

According to some embodiments of the present disclosure, 1500mm ≤ L1 ≤ 2500mm.

L1 can be any value between 1500mm and 2500mm. Optionally, L1 can be 1500mm, 1600mm, 1700mm, 1800mm, 1900mm, 2000mm, 2100mm, 2200mm, 2300mm, 2400mm or 2500mm.

The size of the battery cabin 13 in the first direction meets the above range, and the battery cabin 13 has a larger accommodating space. The size of the battery 20 in the first direction can be larger, allowing the energy storing device 100 to have a higher energy density.

According to some embodiments of the present disclosure, 1600mm ≤ L1 ≤ 2400mm.

L1 can be any value between 1600mm and 2400mm. Optionally, L1 can be 1600mm, 1650mm, 1700mm, 1750mm, 1800mm, 1850mm, 1900mm, 1950mm, 2000mm, 2050mm, 2100mm, 2150mm, 2200mm, 2250mm, 2300mm, 2350mm or 2400mm.

Compared to 1500mm ≤ L1 ≤ 2500mm, when 1600mm ≤ L1 ≤ 2400mm, on the one hand, the battery cabin 13 can have a larger capacity, and on the other hand, the space occupied by the battery cabin 13 in the first direction is smaller, making it easier to layout the energy storing box 10.

According to some embodiments of the present disclosure, 1500mm ≤ L2 ≤ 2500mm.

L2 can be any value between 1500mm and 2500mm. Optionally, L2 can be 1500mm, 1600mm, 1700mm, 1800mm, 1900mm, 2000mm, 2100mm, 2200mm, 2300mm, 2400mm or 2500mm.

The size of the battery 20 in the first direction meets the above range, in order to facilitate the battery 20 to match the size of the battery cabin 13 in the first direction, so that the energy storing device 100 can have a higher energy density.

According to some embodiments of the present disclosure, 1600mm ≤ L2 ≤ 2400mm.

L2 can be any value between 1600mm and 2400mm, and L2 can be 1600mm, 1700mm, 1800mm, 1900mm, 2000mm, 2100mm, 2200mm, 2300mm or 2400mm.

Compared to 1500mm ≤ L2 ≤ 2500mm, when 1600mm ≤ L2 ≤ 2400mm, the size of the battery 20 in the first direction is more suitable for assembly with the battery cabin 13, allowing the energy storing device 100 to have a higher energy density and facilitating the assembly of the battery 20 with other components (such as wiring harnesses).

According to some embodiments of the present disclosure, the first direction is the width direction of the box 10.

As shown in FIG. 14, the first direction extends along the X direction, and the first direction X is the width direction of the box 10.

The first direction is the width direction of the energy storing box 10, such that the battery cabin 13 has a higher space utilization rate in the width direction of the energy storing box 10, in order to improve the overall space utilization rate of the battery cabin 13 and thus make the energy storing device 100 have a higher energy density.

According to some embodiments of the present disclosure, as shown in FIG. 14, the length direction of the battery 20 is parallel to the first direction.

The length direction of battery 20 is parallel to the width direction of energy storing box 10, making it easy for the length of battery 20 to match the width of energy storing box 10. When assembling an energy storing device 100, battery 20 can more easily occupy as much internal space as possible in battery cabin 13, which is conducive to reducing the difficulty of assembling energy storing device 100 with high energy density.

According to some embodiments of the present disclosure, referring to FIG. 1 again, the box 10 includes a cabin 11 and a cabin door 12, wherein the cabin 11 has a battery cabin 13, the cabin door 12 is connected to the cabin 11, and the cabin door 12 is used to close the opening 131 of the battery cabin 13.

As mentioned earlier, the box 10 can include a body and a cover, the cabin 11 corresponds to the aforementioned body, and the cabin door 12 corresponds to the aforementioned cover.

The cabin door 12 can be hinged to cabin 11 by a rotating mechanism such as a rotating shaft. The cabin door 12 rotates relative to cabin 11 to open or close the opening 131 of battery cabin 13. In some embodiments, cabin door 12 may be connected to cabin 11 around an axis parallel to the height direction Z of energy storing box 10, so that cabin door 12 can rotate relative to cabin 11.

The cabin door 12 closes the opening 131 of the battery cabin 13 to facilitate the isolation of the battery 20 and the control box 30 located inside the battery cabin 13 from the outside, so as to protect the battery 20 and the control box 30.

According to some other embodiments of the present disclosure, referring to FIGS. 1 to 3, and further referring to FIG. 16, FIG. 16 is a front view of the energy storing device provided in some other embodiments of the present disclosure. The energy storing device 100 comprises multiple columns of batteries 20 arranged in a second direction in the battery cabin 13; and multiple control boxes 30 are provided, and the multiple control boxes 30 are arranged along the second direction in the battery cabin 13, wherein each control box 30 is electrically connected to one column of batteries 20 and is located above or below the column of batteries 20, wherein the second direction is the length direction of the box 10.

The second direction extends along the Y direction in the figure, and the height direction of the box 10 extends along the Z direction. Each column of batteries 20 includes multiple batteries 20 arranged along the Z direction. Multiple columns of batteries 20 are arranged in the Y direction inside the battery cabin 13. All batteries 20 are arranged in an array inside battery cabin 13.

The control box 30 can be located above or below the battery 20. For example, all control boxes 30 are located below the battery 20, and multiple control boxes 30 are arranged along the Y direction in the battery cabin 13.

The multiple columns of batteries 20 are installed inside the battery cabin 13, and multiple batteries 20 are arranged in a rectangular array, which makes more reasonable use of the space in the battery cabin 13 and facilitates the storage of more batteries 20 in the battery cabin 13, further improving the space utilization rate of the battery cabin 13.

According to some embodiments of the present disclosure, the number of cabin doors 12 is multiple, and multiple cabin doors 12 can be rotatably connected to the cabin 11. The cabin doors 12 are arranged along the length direction of the energy storing box 10. When multiple batteries 20 are arranged in a rectangular array, each cabin door 12 can correspond to multiple batteries 20 in one column to facilitate the assembly of battery 20 and control box 30.

According to some embodiments of the present disclosure, the battery 20 may include a battery 20 box and multiple battery 20 cells accommodated within the battery 20 box, with at least two battery 20 cells connected in parallel among the multiple battery 20 cells.

For example, two battery 20 cells are connected in parallel to form one unit, and then multiple units are connected in series to form battery 20. For another example, three battery 20 cells are connected in parallel to form one unit, and then multiple units are connected in series to form battery 20. It should be pointed out that the connection between the individual cells of battery 20 is an electrical connection to facilitate the transmission of current.

According to some embodiments of the present disclosure, the material of the battery 20 box of battery 20 is aluminum, for example, AL6061. AL6061 is an aluminum alloy material that can be strengthened by heat treatment. It has good formability, weldability, and machinability, as well as moderate strength, and can still maintain good operability after annealing.

Referring to FIGS. 1 to 16, some embodiments of the present disclosure provide an energy storing device 100, which includes a box 10, multiple columns of batteries 20, and multiple control boxes 30. The box 10 is a standard container, and includes a cabin 11 and a cabin door 12. The cabin 11 has a battery cabin 13, and the battery cabin 13 has an opening 131 on one side of the box 10 in the width direction (X direction in the figure). The cabin door 12 is connected to the cabin 11, and the cabin door 12 is used to close the opening 131 of the battery cabin 13.

The box 10 includes a bottom wall 14 (i.e., the bottom wall 14 of the cabin 11), and the bottom wall 14 includes a first base plate 141 and a second base plate 146 arranged opposite to each other along the height direction (Z direction in the figure) of the box 10, and a second thermal insulating layer 145 arranged between the first base plate 141 and the second base plate 146, and also includes a first edge beam 147, a intermediate beam 149, and a second edge beam 148 arranged at intervals along the width direction (X direction in the figure) of the box 10, wherein the second edge beam 148 is closer to the opening 131 of the battery cabin 13 compared to the first edge beam 147. The first base plate 141 is located above the second base plate 146, and includes the first sub-base plate 142 and the second sub-base plate 143 arranged in the X direction. The upper end of the first edge beam 147 extends beyond the upper end of the intermediate beam 149 along the height direction. The first sub-base plate 142 connects the upper end of the first edge beam 147 and the upper end of the intermediate beam 149, so that the first sub-base plate 142 gradually tilts downwards along the direction of the first edge beam 147 pointing towards the intermediate beam 149. The second sub-base plate 143 is connected to the upper end of the intermediate beam 149 and the upper end of the first edge beam 147. The bottom wall 14 is equipped with a drainage hole 1431 that runs through the second sub-base plate 143, the second thermal insulating layer 145, and the second base plate 146. The drainage hole 1431 is used to discharge the liquid inside the box 10. The upper surface of the second sub-base plate 143 is inclined to guide the liquid on the upper surface to the drainage hole 1431. The second base plate 146 is connected to the lower ends of the first edge beam 147, the second edge beam 148, and the intermediate beam 149.

Multiple columns of batteries 20 are arranged along the length direction (Y direction) of the box 10, and multiple batteries 20 in each column are arranged along the height direction (Z direction) of the box 10. One control box 30 is arranged correspondingly and located below each column of batteries 20 in the cabin for the battery 20, and the control box 30 is electrically connected to one row of batteries 20 located above the control box 30. Along the height direction of box 10, control box 30 directly faces battery 20 adjacent thereto.

Referring to FIGS. 1 to 16, some embodiments of the present disclosure provide an energy storing device 100, which includes a box 10, multiple columns of batteries 20, multiple control boxes 30, and a baffle 40. The box 10 is a standard container, and includes a cabin 11 and a cabin door 12. The cabin 11 has a battery cabin 13, and the battery cabin 13 has an opening 131 on one side of the box 10 in the width direction (X direction in the figure). The cabin door 12 is connected to the cabin 11, and the cabin door 12 is used to close the opening 131 of the battery cabin 13.

The box 10 includes a bottom wall 14 (i.e., the bottom wall 14 of the cabin 11), and the bottom wall 14 includes a first base plate 141 and a second base plate 146 arranged opposite to each other along the height direction (Z direction in the figure) of the box 10, and a second thermal insulating layer 145 arranged between the first base plate 141 and the second base plate 146, and also includes a first edge beam 147, a intermediate beam 149, and a second edge beam 148 arranged at intervals along the width direction (X direction in the figure) of the box 10, wherein the second edge beam 148 is closer to the opening 131 of the battery cabin 13 compared to the first edge beam 147. The first base plate 141 is located above the second base plate 146, and includes the first sub-base plate 142 and the second sub-base plate 143 arranged in the X direction. The upper end of the first edge beam 147 extends beyond the upper end of the intermediate beam 149 along the height direction. The first sub-base plate 142 connects the upper end of the first edge beam 147 and the upper end of the intermediate beam 149, so that the first sub-base plate 142 gradually tilts downwards along the direction of the first edge beam 147 pointing towards the intermediate beam 149. The second sub-base plate 143 is connected to the upper end of the intermediate beam 149 and the upper end of the first edge beam 147. The bottom wall 14 is equipped with a drainage hole 1431 that runs through the second sub-base plate 143, the second thermal insulating layer 145, and the second base plate 146. The drainage hole 1431 is used to discharge the liquid inside the box 10. The upper surface of the second sub-base plate 143 is inclined to guide the liquid on the upper surface to the drainage hole 1431. The second base plate 146 is connected to the lower ends of the first edge beam 147, the second edge beam 148, and the intermediate beam 149.

Multiple columns of batteries 20 are arranged along the length direction (Y direction) of the box 10, and multiple batteries 20 in each column are arranged along the height direction (Z direction) of the box 10. One control box 30 is arranged correspondingly and located below each column of batteries 20 in the cabin for the battery 20, and the control box 30 is electrically connected to one row of batteries 20 located above the control box 30.

There are also multiple baffles 40, and one baffle 40 is set between each column of batteries 20 and the control box 30 located below the column of batteries 20. The baffle 40 includes a first surface 43 facing the battery 20, and the first surface 43 is inclined relative to the height direction.

The energy storing device 100 also includes a second bracket 60, which is arranged inside the battery cabin 13 and connected to the box 10. The second bracket 60 includes a bracket body 61 and a second extension part 62, wherein the bracket body 61 are used to support the control box 30, and the second extension part 62 is set at one end of the bracket body 61 near the opening 131 of the battery cabin 13 in the X direction. The bracket body 61 is connected to a first limit member 70 and a second limit member 80 set opposite to each other in the height direction of the box 10. There are two groups of first limit members 70 and second limit members 80, each located on two opposite sides of the baffle 40 along the length direction (Y direction) of the box 10. The baffle 40 includes a baffle body 44 and a first extension part 45. The two ends of the baffle body 44 are inserted between the first limit member 70 and the second limit member 80 in the Y direction. The first extension part 45 is located at one end of the baffle body 44 near the opening 131 of the battery cabin 13 in the X direction. The first extension part 45 is overlapped with the second extension part 62 and connected by bolts, and along the width direction (X direction) of the box 10, the projection of the central axis of the bolts on the box 10 is located above the projection of the gap between the first limit member 70 and the second limit member 80 on the box 10, in order to tilt the baffle body 44 relative to the height direction.

Although the present disclosure has been described with reference to preferred embodiments, various improvements can be made thereto and components therein can be replaced with equivalents without departing from the scope of the present disclosure. Especially, as long as there is no structural conflict, the various technical features mentioned in various embodiments can be combined in any way. The present disclosure is not limited to the specific embodiments disclosed in the text, but includes all technical solutions falling within the scope of the claims.

## Claims

1. An energy storing device, comprising:
a box, having a battery cabin;
at least one column of batteries, arranged inside the battery cabin, wherein each column of batteries comprises multiple batteries arranged along a height direction of the box; and
at least one control box, provided inside the battery cabin.

2. The energy storing device according to claim 1, wherein each control box is electrically connected to one column of batteries, the control box is located below the corresponding column of batteries, and the energy storing device further comprises:
a baffle, arranged between the control box and the at least one column of batteries for protecting the control box.

3. The energy storing device according to claim 2, wherein a projection of the baffle at least partially covers the control box along the height direction.

4. The energy storing device according to claim 3, wherein the projection of the baffle completely covers the control box along the height direction.

5. The energy storing device according to claim 4, wherein the energy storing device further comprises a first bracket, wherein the first bracket is arranged inside the battery cabin and connected to the box, the first bracket is configured to carry the batteries, and a length of the baffle is less than a length of the bracket.

6. The energy storing device according to any one of claims 2-5, wherein the baffle comprises a first surface facing the batteries, wherein the first surface is inclined relative to the height direction.

7. The energy storing device according to claim 6, wherein an angle between the first surface and a reference plane is α, meeting 0°≤α≤30°, and the height direction is perpendicular to the reference plane.

8. The energy storing device according to claim 7, wherein 0.5°≤α≤15°.

9. The energy storing device according to any one of claims 2-8, wherein the energy storing device comprises:
a first limit member and a second limit member, arranged at intervals along the height direction and connected to the box,
wherein the baffle is inserted between the first limit member and the second limit member.

10. The energy storing device according to claim 9, wherein a projection of the first limit member on the baffle and a projection of the second limit member on the baffle are staggered along the height direction.

11. The energy storing device according to claim 9 or 10, wherein the energy storing device further comprises a second bracket, wherein the second bracket is arranged inside the battery cabin and connected to the box, the second bracket is configured to carry the control box, and the first limit member and the second limit member are connected to the second bracket.

12. The energy storing device according to any one of claims 2-11, wherein the energy storing device further comprises a fastener, and the baffle is detachably connected to the box through the fastener.

13. The energy storing device according to claim 12, wherein the baffle comprises a baffle body and a first extension part, wherein the baffle body is inserted between the first limit member and the second limit member, and the first extension part extends from an edge of the baffle body; and
the energy storing device further comprises a second bracket, wherein the second bracket is arranged inside the battery cabin and connected to the box, the second bracket is configured to carry the control box, and the second bracket comprises a bracket body and a second extension part, wherein the second extension part extends from an edge of the bracket body, and
the first extension part and the second extension part are stacked and detachably connected through the fastener.

14. The energy storing device according to any one of claims 2-13, wherein the baffle comprises a substrate and a first thermal insulating layer stacked along the height direction.

15. The energy storing device according to claim 14, wherein the first thermal insulating layer is located on one side of the substrate facing the control box.

16. The energy storing device according to claim 14 or 15, wherein a heat conductivity coefficient of the first thermal insulating layer is T1, meeting T1 ≤ 0.05W/m·K.

17. The energy storing device according to claim 1, wherein each control box is electrically connected to one column of batteries, and the control box is located above or below the corresponding column of batteries, wherein along the height direction, the control box directly faces a battery adjacent to the control box.

18. The energy storing device according to any one of claims 1-17, wherein the box comprises a bottom wall, wherein the bottom wall comprises a second thermal insulating layer.

19. The energy storing device according to claim 18, wherein the bottom wall further comprises a first base plate and a second base plate arranged opposite to each other along the height direction, and the second thermal insulating layer is arranged between the first base plate and the second base plate.

20. The energy storing device according to claim 19, wherein the second base plate is located below the first base plate, and at least part of the first base plate is inclined relative to the height direction.

21. The energy storing device according to claim 20, wherein the bottom wall further comprises:
a first edge beam and a second edge beam, arranged at intervals along a first direction; and
a intermediate beam, arranged between the first edge beam and the second edge beam, wherein the first edge beam, the second edge beam, and the intermediate beam all extend in a second direction, and the first direction, the second direction, and the height direction are perpendicular to each other; and
the first base plate comprises a first sub-base plate and a second sub-base plate, wherein the first sub-base plate is connected to the first edge beam and the intermediate beam, and the second sub-base plate is connected to the second edge beam and the intermediate beam.

22. The energy storing device according to claim 21, wherein the first sub-base plate gradually tilts downwards along a direction of the first edge beam pointing towards the intermediate beam.

23. The energy storing device according to claim 22, wherein along the height direction, an upper end of the first edge beam extends beyond an upper end of the intermediate beam, and the first sub-base plate connects the upper end of the first edge beam and the upper end of the intermediate beam.

24. The energy storing device according to claim 22 or 23, wherein the bottom wall is provided with a drainage hole that passes through the second sub-base plate, the second thermal insulating layer, and the second base plate, wherein the drainage hole is configured to discharge a liquid inside the box.

25. The energy storing device according to claim 24, wherein an upper surface of the second sub-base plate is inclined to guide the liquid on the upper surface to the drainage hole.

26. The energy storing device according to claim 24 or 25, wherein the bottom wall further comprises:
a sleeve, wherein the sleeve is provided at the drainage hole for separating the liquid from the second thermal insulating layer.

27. The energy storing device according to any one of claims 19-26, wherein the bottom wall further comprises:
a support member, provided between the first base plate and second base plate, and along the height direction, the support member, the first base plate, and the second base plate are arranged at intervals from each other, and the support member is configured to support the second thermal insulating layer.

28. The energy storing device according to any one of claims 18-27, wherein a heat conductivity coefficient of the second thermal insulating layer is T2, meeting T2 ≤ 0.05W/m·K.

29. The energy storing device according to any one of claims 18-28, wherein a material of the second thermal insulating layer is at least one of polyurethane foam or rock wool.

30. The energy storing device according to any one of claims 1-29, wherein the box is a standard container.

31. The energy storing device according to any one of claims 1-30, wherein the battery cabin has an opening in a first direction, and along the first direction, the battery cabin is provided with one battery.

32. The energy storing device according to claim 31, wherein a size of the battery cabin in the first direction is L1, and a size of the battery in the first direction is L2, satisfying that L1 is less than 2L2.

33. The energy storing device according to claim 32, wherein 95%≤L2/L1≤100%.

34. The energy storing device according to claim 33, wherein 98%≤L2/L1≤99%.

35. The energy storing device according to any one of claims 32-34, wherein 1500mm≤L1≤2500mm.

36. The energy storing device according to claim 35, wherein 1600mm≤L1≤2400mm.

37. The energy storing device according to any one of claims 32-36, wherein 1500mm≤L2≤2500mm.

38. The energy storing device according to claim 37, wherein 1600mm≤L2≤2400mm.

39. The energy storing device according to any one of claims 31-38, wherein the first direction is a width direction of the box.

40. The energy storing device according to claim 39, wherein a length direction of the batteries is parallel to the first direction.

41. The energy storing device according to any one of claims 1-40, wherein the box comprises a cabin and a cabin door, wherein the cabin has the battery cabin, the cabin door is connected to the cabin, and the cabin door is configured to close an opening of the battery cabin.

42. The energy storing device according to any one of claims 1-41, wherein the energy storing device comprises multiple columns of batteries arranged in a second direction in the battery cabin; and
multiple control boxes are provided, wherein the multiple control boxes are arranged along the second direction in the battery cabin, wherein each control box is electrically connected to one column of batteries and is located above or below the one column of batteries, wherein the second direction is a length direction of the box.
